(19) **Europäisches Patentamt / European Patent Office / Office européen des brevets**

(11) **EP 3 428 858 B1**

(12) **FASCICULE DE BREVET EUROPEEN**

(45) Date de publication et mention
de la délivrance du brevet:
**08.09.2021 Bulletin 2021/36**

(51) Int Cl.:
**G06Q 10/04** (2012.01)   **F24H 9/00** (2006.01)
**G06Q 50/06** (2012.01)

(21) Numéro de dépôt: **18183161.1**

(22) Date de dépôt: **12.07.2018**

(54) **DISPOSITIF D'OPTIMISATION DE L'UTILISATION D'UNE ÉNERGIE RENOUVELABLE DISPONIBLE**

**OPTIMIERUNGSVORRICHTUNG FÜR DIE BENUTZUNG EINER VERFÜGBAREN ERNEUERBAREN ENERGIE**

**DEVICE FOR OPTIMISING THE USE OF RENEWABLE ENERGY AVAILABLE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.07.2017 FR 1756645**

(43) Date de publication de la demande:
**16.01.2019 Bulletin 2019/03**

(73) Titulaire: **Electricité de France
75008 Paris (FR)**

(72) Inventeurs:
• **COINCE, Anne-Sophie
77210 AVON (FR)**
• **CHEN, Naixin
77300 FONTAINEBLEAU (FR)**
• **DEUTZ, Kevin
75018 PARIS (FR)**

(74) Mandataire: **Regimbeau
20, rue de Chazelles
75847 Paris Cedex 17 (FR)**

(56) Documents cités:
**EP-A1- 3 065 021   US-A1- 2009 188 486**

• **Hachem Ben Nejma: "Étude de l'interaction thermo-aéraulique entre un capteur PV et une pompe à chaleur (PAC) intégrés à un bâtiment basse exergie", , 1 janvier 2012 (2012-01-01), pages 1-226, XP055446441, Extrait de l'Internet: URL:https://tel.archives-ouvertes.fr/paste l-01069083/document [extrait le 2018-01-31]**
• **Kevin Ruben Deutz ET AL: "Modeling and Experimental Study of a Heat Pump Water Heater Cycle", 16th International Refrigeration and Air Conditioning Conference at Purdue, 14 juillet 2016 (2016-07-14), pages 0-10, XP055506873, Extrait de l'Internet: URL:https://docs.lib.purdue.edu/cgi/viewco ntent.cgi?article=2607&context=iracc [extrait le 2018-09-13]**

**Description**

## DOMAINE TECHNIQUE GÉNÉRAL

La présente invention concerne l'optimisation de l'utilisation d'une énergie renouvelable disponible.

La présente invention s'applique en particulier mais non exclusivement à l'optimisation de l'exploitation de l'énergie solaire captée par des panneaux photovoltaïques.

Plus précisément l'invention concerne l'optimisation de l'autoconsommation d'un excédent de production photovoltaïque avec une charge de puissance non modulable, notamment un chauffe-eau thermodynamique, tout en respectant les anti-courts cycles et en limitant le soutirage réseau de la charge.

## ART ANTÉRIEUR

Aujourd'hui, les algorithmes d'autoconsommation d'une production d'énergie renouvelable et intermittente utilisent des données « temps réel » de surplus (lorsque les panneaux sont raccordés en aval du point de livraison d'un site) et/ou de production et de consommation. Ils commandent l'activation d'une charge (typiquement un chauffe-eau électrique à accumulation) lorsque son taux de couverture solaire est supérieur à un seuil (typiquement 30% de la puissance de la charge pilotée pour compenser le report des heures creuses vers les heures pleines) pour absorber l'excédent au fil de l'eau. Ils maintiennent le nouvel état pendant une durée minimale afin de respecter les contraintes de fonctionnement de l'équipement (typiquement l'anti-court cycle de marche). On entend par « anti-court cycle de marche » un cahier des charges bien connu de l'homme de l'art qui limite les commutations sur des intervalles de temps courts pour éviter les risques de détérioration du matériel impliqué.

Toutefois, ce mode de fonctionnement « opportuniste » ne permet pas de capter tout le potentiel d'autoconsommation de ces charges. En effet, l'absence d'anticipation en termes de surplus photovoltaïque disponible et de temps de fonctionnement de la charge ne permet pas de garantir un placement optimal.

Les stratégies des produits du marché consistent en effet soit à programmer une plage de préparation de l'eau chaude en journée (typiquement entre 10h et 18h) pour synchroniser la consommation d'électricité avec la ressource solaire ; soit à effectuer des relances en journée pour absorber un excédent ponctuel d'énergie renouvelable, ces relances pouvant être combinées avec une consigne de température plus élevée. Dans le premier cas, la charge du ballon ne coïncide pas nécessairement avec le maximum de surplus d'énergie photovoltaïque disponible, le ballon pouvant soutirer de l'énergie du réseau le matin, puis être saturé au moment du pic de production. Dans le second cas, et malgré une éventuelle consigne de température plus basse, la charge nocturne impute une partie du gisement de consommation du ballon et les relances en journée, réalisées au fil de l'eau selon un critère fixe (typiquement la valeur du surplus est supérieure à la puissance moyenne du compresseur) et pendant une durée minimale prédéterminée (typiquement plusieurs dizaines de minutes) ne garantissent pas un optimum pour les utilisateurs, d'autant que les chauffes multiples pénalisent le rendement global du système.

Un produit dénommé « sunny home manager 2.0 » semble être le produit le plus avancé de l'état de la technique. Toutefois il n'est pour l'instant compatible qu'avec les chauffe-eaux thermodynamiques intelligents du fabricant Stiebel Eltron. Ces chauffe-eaux thermodynamiques communicants sont capables de transmettre au gestionnaire la demande d'énergie thermique. Pour cela, le chauffe-eau thermodynamique doit être équipé d'un bus de communication pour transmettre les données au gestionnaire, ce qui n'est pas le cas de nombreux chauffe-eaux, notamment des produits installés en France. La planification multi-usages consiste à optimiser l'empilement des blocs d'appel de puissance des différents équipements. Le fractionnement des charges ainsi que l'asservissement temps réel ne semblent pas être intégré dans les stratégies de pilotage.

Le document EP 2 065 021 A1 décrit un chauffe-eau qui peut être alimenté par une installation photovoltaïque dédiée. Le document Hachem Ben Nejma « Etude de l'interaction thermo-aéraulique entre un capteur PV et une pompe à chaleur (PAC) intégrés à un bâtiment basse énergie », 1 janvier 2012, le document Kevin Ruben Deutz et al « Modeling and experimental study of a heat pump water heater cycle », 16th international refrigeration and air conditioning conférence at Purdue, 14 juillet 2016, et le document US 2009/188486 A1, concernent également l'utilisation des énergies renouvelables et la consommation d'énergie par des charges de puissance.

La baisse attendue du coût des énergies renouvelables décentralisées conjuguée à la hausse prévisible des prix de l'électricité ainsi que l'aspiration de certains consommateurs de pouvoir répondre à leurs besoins électriques par des moyens de production locaux « verts » vont ouvrir la voie au développement de l'autoconsommation.

Avec près de 12 millions d'unités installées uniquement en France dont plus de 80% sont asservies au signal tarifaire Heures Pleines/ Heures Creuses, le parc de Chauffe-Eau Joule (CEJ) à accumulation résidentiel - utilisé aujourd'hui pour le lissage journalier de la courbe de charge - est susceptible de répondre à ces nouveaux enjeux. Les chauffe-eau thermodynamiques (CET) sont également amenés à jouer un rôle de lissage de la production d'énergie renouvelable excédentaire, notamment pour les futurs bâtiments à énergie positive labellisés BEPOS.

Cependant, la problématique du contrôle en puissance de ces équipements - aujourd'hui régulés selon d'autres critères (garantie de confort) - se pose dans la mesure où les solutions existantes proposées dans l'état de la technique ne donnent pas totalement satisfaction.

## PRÉSENTATION GÉNÉRALE DE L'INVENTION

Dans ce contexte la présente invention vise à perfectionner l'état de la technique.

La présente invention a en particulier pour objectif d'optimiser l'utilisation de l'énergie disponible renouvelable, notamment photovoltaïque.

Ce but est atteint dans le cadre de l'invention grâce à un système d'alimentation électrique comprenant :

- un réseau d'alimentation électrique,
- au moins une source locale d'énergie renouvelable, par exemple formée d'au moins un panneau photovoltaïque, dont la production est soit injectée sur le réseau d'alimentation électrique, soit autoconsommée par le propriétaire de la source,
- un système de mesure de production permettant de connaître la production de la source d'énergie renouvelable,
- une charge électrique non modulable en puissance, par exemple un chauffe-eau joule régulé en Tout ou Rien, ou un chauffe-eau thermodynamique à vitesse fixe ou variable mais sans commande externe de la fréquence,
- un système permettant de mesurer la consommation d'énergie,
- un organe de mesure de la consommation d'électricité de la charge,
- un organe de contrôle qui intègre les informations issues des systèmes de mesure précités et calcule les critères d'enclenchement de la charge électrique pour absorber la production d'énergie en minimisant le soutirage sur le réseau, l'organe de contrôle comprenant

1) des moyens conçus pour la réalisation d'une estimation à un horizon de temps déterminé, de la production d'énergie électrique renouvelable, par exemple photovoltaïque, en utilisant un modèle de simulation de l'installation de production d'énergie électrique renouvelable, par exemple photovoltaïque, d'une part et des prévisions météorologiques d'autre part,

2) des moyens conçus pour la réalisation d'une estimation à l'horizon de temps déterminé de la consommation des usages hors charge pilotée par auto-apprentissage à partir d'un historique glissant de consommation,

3) des moyens conçus pour la prévision d'une puissance thermique de la charge électrique (32) non modulable en puissance, à l'aide d'une équation multiparamétrique, qui exploite un modèle polynomial d'ordre deux de la puissance thermique d'un chauffe-eau thermodynamique du type

$$\dot{Q}_{cond,ref}\left(n_{comp}, \frac{Pe_{comp}}{Pe_{comp,max}}, T_{air}\right)$$
$$= a_0 + a_1 n_{comp} + a_2 n_{comp}^2 + a_3\left(\frac{Pe_{comp}}{Pe_{comp,max}}\right) + a_4\left(\frac{Pe_{comp}}{Pe_{comp,max}}\right)^2$$
$$+ a_5 T_{air} + a_6 T_{air}^2 + a_7 T_{air}\left(\frac{Pe_{comp}}{Pe_{comp,max}}\right) + a_8 T_{air} n_{comp}$$
$$+ a_9\left(\frac{Pe_{comp}}{Pe_{comp,max}}\right)n_{comp}$$

, où les coefficients $a_0$ à $a_9$ sont des coefficients définis par tous moyens appropriés, $Pe_{comp}$ représente une puissance électrique d'un compresseur, $n_{comp}$ représente une vitesse de rotation d'un compresseur, $T_{air}$ représente une température de l'air,

4) des moyens conçus pour la réalisation d'une estimation du temps de fonctionnement de la charge pilotée à partir d'un historique glissant de consommation d'électricité, de prévisions de la température extérieure à l'horizon de temps déterminé, et d'un modèle d'estimation de la puissance thermique produite par un condenseur d'un chauffe-eau thermodynamique, et

5) des moyens conçus pour la réalisation d'un calcul dynamique des critères d'activation de la charge pour minimiser le soutirage sur le réseau d'alimentation électrique et maximiser l'autoconsommation de l'énergie photovoltaïque,

de sorte que en cas d'autoconsommation de la production fournie par la source locale, l'organe de contrôle permet d'optimiser l'utilisation de l'énergie produite par la source d'énergie renouvelable.

L'invention permet d'optimiser le seuil d'activation de la charge par une mise à jour régulière (toutes les heures ou demi-heures) avec le rafraîchissement des prévisions météorologiques, celui de l'énergie thermique résiduelle à fournir et de l'énergie thermique disponible prévisionnelle.

Plus précisément selon l'invention l'organe de contrôle permet d'optimiser l'utilisation de l'énergie produite par la source d'énergie renouvelable en effectuant un calcul dynamique d'une heure de programmation de l'activation de la charge qui permet l'activation de ladite charge pilotée la plus tardive possible qui permet de respecter une heure de fin de préparation en fonction desdites estimations.

De préférence le système comprend :

1) des moyens conçus pour réaliser une estimation du temps de fonctionnement de la charge pilotée à partir d'un historique glissant de consommation d'électricité, d'un modèle de coefficient de performance, et de prévisions de la température extérieure à un horizon de temps déterminé,
2) des moyens conçus pour réaliser une estimation à un horizon de temps déterminé, du surplus d'énergie renouvelable, par différence entre :

- Une estimation à l'horizon de temps déterminé, de la production photovoltaïque en utilisant un modèle de simulation de l'installation photovoltaïque d'une part et des prévisions météorologiques d'autre part,
- Une estimation à l'horizon de temps déterminé, de la consommation des usages hors charge pilotée par auto-apprentissage à partir d'un historique glissant de consommation, et

3) des moyens conçus pour opérer un calcul dynamique de deux critères d'activation de la charge pour minimiser le soutirage sur le réseau d'alimentation électrique et maximiser l'autoconsommation d'énergie photovoltaïque.

La charge électrique non modulable en puissance peut être un chauffe-eau thermodynamique à vitesse fixe ou variable mais sans commande externe de la fréquence.

L'au moins une source locale d'énergie renouvelable peut être formée d'au moins un panneau photovoltaïque, et l'organe de contrôle peut comprendre des moyens conçus pour la réalisation d'une estimation à un horizon de temps déterminé, de la production d'énergie électrique photovoltaïque, en utilisant un modèle de simulation de l'installation de production d'énergie électrique photovoltaïque, d'une part et des prévisions météorologiques d'autre part.

L'invention concerne également un procédé d'optimisation de l'utilisation d'une énergie renouvelable disponible dans un système du type précité, en vue notamment de l'optimisation de l'autoconsommation d'un excédent de production d'énergie électrique à base d'une énergie renouvelable, qui comprend les étapes suivantes :

1) Réalisation d'une estimation à un horizon de temps déterminé, par exemple H+24, de la production d'énergie électrique renouvelable, par exemple photovoltaïque, en utilisant un modèle de simulation de l'installation de production d'énergie électrique renouvelable d'une part et des prévisions météorologiques d'autre part,
2) Réalisation d'une estimation à l'horizon de temps déterminé, par exemple H+24, de la consommation des usages hors charge pilotée (typiquement hors eau chaude sanitaire) par auto-apprentissage à partir d'un historique glissant de consommation,
3) Prévision de la puissance thermique d'une charge électrique non modulable en puissance, à l'aide d'une équation multiparamétrique, qui exploite un modèle polynomial d'ordre deux de la puissance thermique d'un chauffe-eau thermodynamique du type

$$\dot{Q}_{cond,ref}\left(n_{comp}, \frac{Pe_{comp}}{Pe_{comp,max}}, T_{air}\right)$$
$$= a_0 + a_1 n_{comp} + a_2 n_{comp}^2 + a_3\left(\frac{Pe_{comp}}{Pe_{comp,max}}\right) + a_4\left(\frac{Pe_{comp}}{Pe_{comp,max}}\right)^2$$
$$+ a_5 T_{air} + a_6 T_{air}^2 + a_7 T_{air}\left(\frac{Pe_{comp}}{Pe_{comp,max}}\right) + a_8 T_{air} n_{comp}$$
$$+ a_9\left(\frac{Pe_{comp}}{Pe_{comp,max}}\right) n_{comp}$$

, où les coefficients $a_0$ à $a_9$ sont des coefficients définis par tous moyens appropriés, $Pe_{comp}$ représente une puissance électrique d'un compresseur, $n_{comp}$ représente une vitesse de rotation d'un compresseur, $T_{air}$ représente

une température de l'air,

4) Réalisation d'une estimation du temps de fonctionnement de la charge pilotée (typiquement un ballon de stockage d'eau chaude sanitaire) à partir d'un historique glissant de consommation d'électricité, de prévisions de la température extérieure à l'horizon de temps déterminé, par exemple H+24, et d'un modèle d'estimation de la puissance thermique produite par un condenseur produite d'un chauffe-eau thermodynamique,

5) Calcul dynamique des critères d'activation de la charge pour minimiser le soutirage sur le réseau d'alimentation électrique et maximiser l'autoconsommation de l'énergie électrique renouvelable, notamment de l'énergie photovoltaïque.

Un point important de l'invention, dans le cas d'un chauffe-eau thermodynamique, c'est-à-dire un chauffe-eau dont l'eau est chauffée par une pompe à chaleur, est le développement d'un modèle générique paramétrable permettant de calculer la puissance thermique produite par un chauffe-eau thermodynamique (CET) sans mesure intrusive. Ce modèle est indispensable pour calculer la demande d'eau chaude sanitaire (à partir des estimations d'énergie thermique journalière produite qui sont archivées dans une base de données) et prévoir le temps de fonctionnement (à partir des estimations d'énergie thermique productible). En effet, contrairement au chauffage par résistance(s), cette technologie de chauffe-eau thermodynamique est thermosensible. Le temps de marche pour assurer la fourniture d'un besoin par un chauffe-eau thermodynamique peut être très différent du temps de marche observé dans le passé si les conditions climatiques ont changé.

Plus précisément encore, de préférence selon l'invention, il est proposé un procédé qui comprend les étapes consistant à :

1) Réaliser une estimation du temps de fonctionnement de la charge pilotée (typiquement un ballon eau chaude sanitaire) à partir d'un historique glissant de consommation d'électricité, d'un modèle de coefficient de performance, et de prévisions de la température extérieure à un horizon de temps déterminé, par exemple H+24,

2) Réaliser une estimation à un horizon de temps déterminé, par exemple H+24, de l'excédent de production d'énergie renouvelable, par différence entre :

- Une estimation à l'horizon de temps déterminé, par exemple H+24, de la production d'énergie photovoltaïque en utilisant un modèle de simulation de l'installation photovoltaïque d'une part et des prévisions météorologiques d'autre part,
- Une estimation à l'horizon de temps déterminé, par exemple H+24, de la consommation des usages hors charge pilotée (typiquement hors eau chaude sanitaire) par auto-apprentissage à partir d'un historique glissant de consommation,

3) Opérer un calcul dynamique de deux critères d'activation de la charge pour minimiser le soutirage sur le réseau d'alimentation électrique et maximiser l'autoconsommation d'énergie photovoltaïque.

Le procédé peut comprendre une étape de réalisation d'une estimation à un horizon de temps déterminé, de la production d'énergie électrique renouvelable photovoltaïque, en utilisant un modèle de simulation de l'installation de production d'énergie électrique renouvelable photovoltaïque, d'une part et des prévisions météorologiques d'autre part.

Le calcul dynamique de critères d'activation de la charge peut comprendre les étapes qui consistent à opérer

- un calcul dynamique d'un seuil optimal de relance (toutes les heures par exemple), et
- un calcul dynamique d'une heure de programmation de l'activation de la charge (toutes les 10 minutes par exemple) permettant de respecter une heure de fin de préparation (typiquement Heure Fin=18h).

De préférence le calcul dynamique d'un seuil optimal de relance prend en compte dans une consigne de pilotage un temps minimal de fonctionnement, par exemple 15 minutes, et un temps minimal d'arrêt, par exemple 5 minutes, pour éviter les courts cycles qui endommagent le matériel.

Le calcul dynamique d'un seuil optimal de relance peut être opéré toutes les heures et prendre en compte dans une consigne de pilotage un temps minimal de fonctionnement de 15 minutes et un temps minimal d'arrêt de 5 minutes. Le calcul dynamique d'une heure de programmation de l'activation de la charge peut être opéré toutes les 10 minutes.

Dans le cadre de l'invention l'expression « H + 24 » doit être comprise comme « 24 heures pleines ».

Selon d'autres caractéristiques préférentielles du procédé selon l'invention :

- l'étape de prévision de la puissance thermique de la charge électrique non modulable en puissance, exploite pour l'application à tout type de chauffe-eau thermodynamique, une extrapolation d'un modèle polynomial du type :

$$\dot{Q}_{cond} = \frac{V_{tank}}{V_{tank,ref}} \frac{t_{heating,ref}}{t_{heating}} \dot{Q}_{cond,ref}$$

permettant de généraliser l'estimation à tout type de chauffe-eau thermodynamique du marché.

- la définition du temps d'alimentation de la charge électrique intègre des phases de dégivrage d'une pompe à chaleur associée à la charge électrique.
- la définition du temps d'alimentation de la charge électrique intègre d'une part la durée intrinsèque de dégivrage d'une pompe à chaleur associée à la charge électrique et d'autre part la période nécessaire pour assurer la remontée en température initiale du ballon formant la charge, avant le dégivrage, dûe au refroidissement du ballon provoqué par le dégivrage.

## PRÉSENTATION DES FIGURES

D'autres caractéristiques, buts et avantages de la présente invention apparaitront à la lecture de la description détaillée qui va suivre et en regard des dessins annexés, donnés à titre d'exemples non limitatifs et sur lesquels

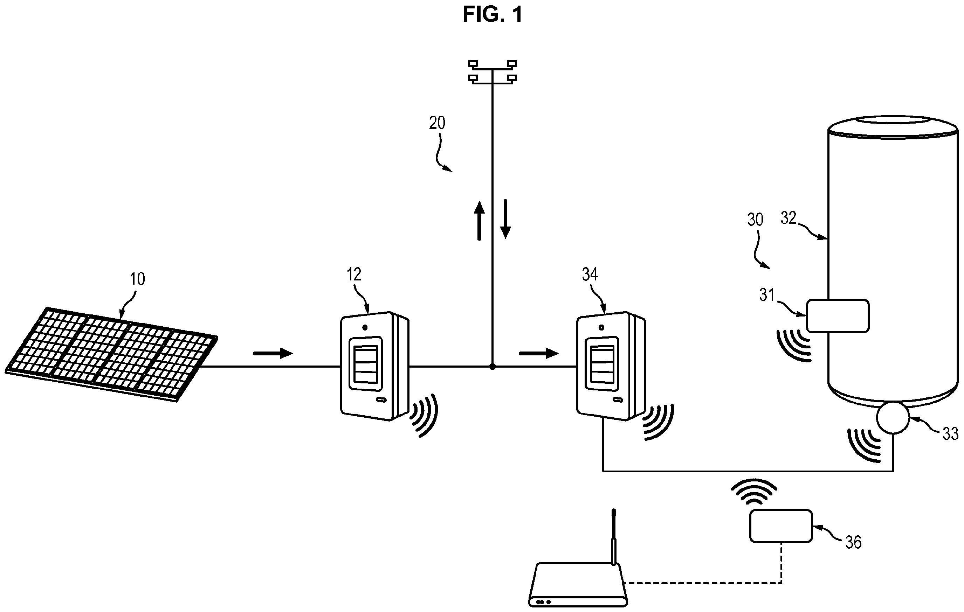

- la figure 1 annexée représente schématiquement une installation adaptée pour mettre en œuvre l'invention,
- la figure 2 représente la comparaison entre la puissance thermique au condenseur donnée par une équation polynomiale d'ordre 2 conforme à l'invention et un modèle détaillé développé avec la bibliothèque TIL de modélisation de composants thermo-hydrauliques, sur une plage de 30Hz à 120Hz et une température d'air de -5°C à 30°C, sans dégivrage,
- la figure 3 représente la comparaison entre la puissance thermique au condenseur donnée par une seconde équation extrapolée conforme à l'invention et un modèle détaillé développé avec TIL, sur une plage de température d'air de -5°C à 30°C, sans dégivrage,
- la figure 4 représente la comparaison entre la puissance thermique au condenseur donnée par l'équation polynomiale d'ordre 2 conforme à l'invention et des données expérimentales obtenues en variant la vitesse du compresseur et la température de l'air, sans dégivrage,
- la figure 5 représente une comparaison expérimentale de températures de ballon obtenues avec la deuxième équation et un modèle de ballon en variant la température de l'air, sans dégivrage,
- la figure 6 représente la comparaison entre la puissance thermique au condenseur donnée par l'équation polynomiale d'ordre 2 conforme à l'invention et des données du modèle détaillé TIL en variant la position de la charge thermique du ballon
- la figure 7 représente une phase de dégivrage modélisée avec un modèle détaillé, comparé à des données expérimentales, pour une température d'air de 0°C et une humidité relative de 87%, plus précisément la figure 7a représente la température de l'eau dans le ballon, la figure 7b représente la température du fluide frigorigène au niveau de l'évaporateur de la pompe à chaleur et la figure 7c représente la puissance électrique au niveau du compresseur, et

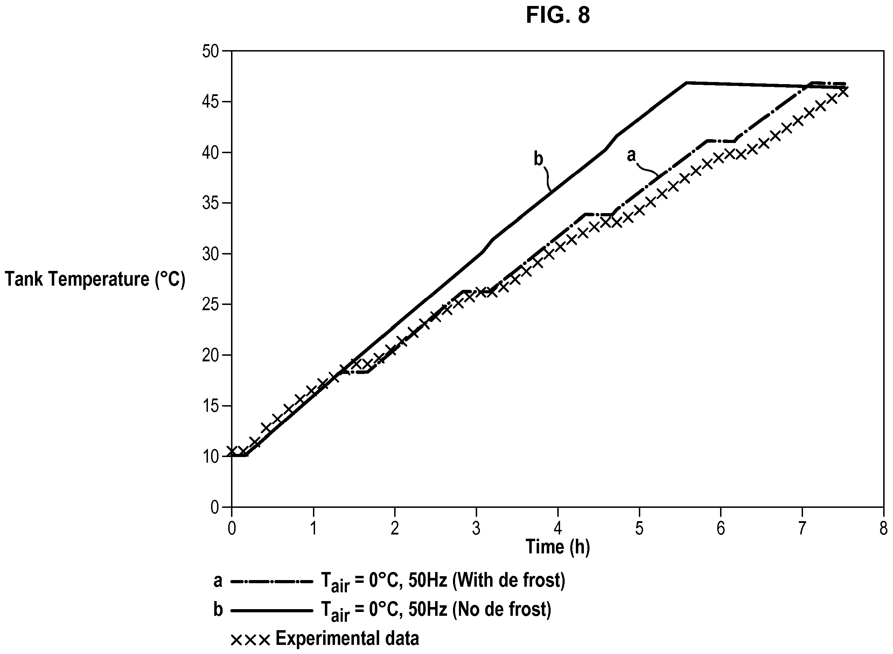

- la figure 8 représente un cycle de chauffe comportant une phase de dégivrage modélisée avec une phase d'arrêt de machine, comparée avec une chauffe sans arrêt et des données expérimentales pour une température d'air de O°C et une humidité relative de 87%.

## DESCRIPTION DETAILLEE DE L'INVENTION

Comme indiqué précédemment la présente invention propose un procédé qui comprend les étapes suivantes :

1) Réalisation d'une estimation à un horizon de temps déterminé, par exemple H+24, de la production photovoltaïque en utilisant un modèle de simulation de l'installation photovoltaïque d'une part et des prévisions météorologiques d'autre part,

2) Réalisation d'une estimation à l'horizon de temps déterminé, par exemple H+24, de la consommation des usages hors charge pilotée (typiquement hors eau chaude sanitaire) par auto-apprentissage à partir d'un historique glissant de consommation,

3) Réalisation d'une estimation du temps de fonctionnement de la charge pilotée (typiquement un ballon de stockage d'eau chaude sanitaire) à partir d'un historique glissant de consommation d'électricité, et de prévisions de la température extérieure à l'horizon de temps déterminé, par exemple H+24, et le cas échéant d'un modèle d'estimation de la puissance thermique du condenseur produite par le chauffe-eau thermodynamique e,

4) Calcul dynamique des critères d'activation de la charge pour minimiser le soutirage sur le réseau d'alimentation électrique et maximiser l'autoconsommation de l'énergie photovoltaïque.

Dans le cas d'un chauffe-eau à effet joule, on peut considérer que le Coefficient de Performance (COP) est égal à 1.

Plus précisément encore de préférence selon l'invention il est proposé un procédé qui comprend les étapes consistant à :

1) Réaliser une estimation du temps de fonctionnement de la charge pilotée (typiquement un ballon eau chaude sanitaire) à partir d'un historique glissant de consommation d'électricité, le cas échéant d'un modèle de coefficient de performance, et de prévisions de la température extérieure un horizon de temps déterminé, par exemple H+24,

2) Réaliser une estimation à un horizon de temps déterminé, par exemple H+24, du surplus d'énergie renouvelable, de préférence par différence entre :

- Une estimation à l'horizon de temps déterminé, par exemple H+24, de la production photovoltaïque en utilisant un modèle de simulation de l'installation photovoltaïque d'une part et des prévisions météorologiques d'autre part,
- Une estimation à l'horizon de temps déterminé, par exemple H+24, de la consommation des usages hors charge pilotée (typiquement hors eau chaude sanitaire) par auto-apprentissage à partir d'un historique glissant de consommation, et

3) Opérer un calcul dynamique de deux critères d'activation de la charge pour minimiser le soutirage sur le réseau d'alimentation électrique et maximiser l'autoconsommation d'énergie photovoltaïque.

Le calcul dynamique de critères d'activation de la charge peut comprendre les étapes qui consistent à opérer

- un calcul dynamique d'un seuil optimal de relance (toutes les heures par exemple) et
- un calcul dynamique d'une heure de programmation de la chauffe (toutes les 10 minutes par exemple) permettant de respecter une heure de fin de préparation (typiquement Heure Fin=18h).

Pour le calcul dynamique d'un seuil optimal de relance (par exemple toutes les heures), dans le cas d'une pompe à chaleur, il convient de prendre en compte dans la consigne de pilotage un temps minimal de fonctionnement (par exemple 15 minutes) et un temps minimal d'arrêt (par exemple 5 minutes) pour éviter les courts cycles qui endommagent le matériel. Dès que le surplus d'énergie photovoltaïque est supérieur au produit de ce seuil optimal par la puissance de la charge et que la durée de mise hors service est supérieure à l'anti-court cycle d'arrêt imposé, alors la charge est activée. A l'inverse, lorsque le surplus d'énergie photovoltaïque devient inférieur à cette valeur et que la durée de mise en service est supérieure à l'anti-court cycle de marche alors la charge est désactivée. On préfère utiliser un calcul de valeur moyenne glissante du surplus d'énergie photovoltaïque (typiquement sur plusieurs minutes, avec une mise à jour toutes les minutes) plutôt qu'une valeur instantanée potentiellement très chahutée.

Pour le calcul dynamique d'une heure de programmation de la chauffe afin de respecter une heure de fin de préparation, dès que l'énergie thermique pouvant être délivrée par le système de production (résistances ou pompe à chaleur) entre l'instant t et l'heure de fin devient plus petite que l'estimation de l'énergie thermique résiduelle à apporter au ballon, la charge est activée qu'il y ait ou non de la production photovoltaïque (marche forcée).

On va maintenant préciser les modalités de mise en œuvre des étapes de prévision de l'énergie thermique à apporter, d'estimation du surplus d'énergie renouvelable et de calcul des critères d'activation et de désactivation de la charge pilotée non modulable.

## I. PREVISION DE L'ENERGIE THERMIQUE A APPORTER

L'estimation du temps de fonctionnement de la charge est basée sur une prévision de l'énergie thermique à apporter au réservoir d'eau chaude sanitaire (ECS). Celle-ci est calculée par auto-apprentissage à partir d'un historique glissant (typiquement sur une période d'un mois) de la consommation d'électricité du ballon.

Il faut pour cela mesurer ou estimer la demande thermique et l'archiver dans une base de données qui permet de construire un modèle statistique par auto-apprentissage sur un historique glissant (typiquement de 1 mois).

### I.0. ESTIMATION DE LA CONSOMMATION D'ENERGIE THERMIQUE

Dans le cas d'un chauffe-eau Joule, la consommation d'électricité peut être issue de mesures ou de la connaissance de l'état du thermostat et de la puissance nominale des résistances.

$$P_{th} = P_{el\ mesurée}\ ou\ P_{th} = Thermostat_{On} * P_{nominale\ cej}$$

Dans le cas d'un chauffe-eau thermodynamique, il est nécessaire de disposer de mesures de la consommation d'électricité et de la valeur du Coefficient de Performance (COP) de la pompe à chaleur (PAC), la puissance thermique transférée étant le produit des deux. Cette information n'est pas accessible sur la plupart des produits du marché. Dans le cadre de l'invention on utilise donc un modèle générique paramétrable d'évolution du Coefficient de Performance (COP) qui est calibré avec les données constructeurs (typiquement la puissance maximale absorbable par le chauffe-eau et la puissance de l'appoint Joule). Théoriquement, le Coefficient de Performance (COP) dépend principalement de la température de la source chaude (ECS) le long du condenseur et de la température de la source froide (typiquement la température extérieure) au niveau de l'évaporateur. La stratification dans le ballon étant inconnue, un modèle de Coefficient de Performance (COP) peut être construit à partir d'un plan d'expériences, de sorte que le Coefficient de Performance ne dépende que des données disponibles : l'appel de puissance électrique totale du chauffe-eau qui est mesuré et la température extérieure qui est soit mesurée localement soit récupérée au niveau de la station météorologique la plus proche par Internet. Le modèle peut être obtenu par régression sur les résultats des simulations numériques.

Le modèle dynamique, qui est un modèle physique détaillé, peut être conçu et validé à l'aide d'essais menés en laboratoire équipé d'enceintes climatiques. Il permet de calculer d'une part la puissance du compresseur ; et d'autre part, celle du condenseur selon deux lois polynomiales faisant intervenir la fréquence du compresseur (f), la température d'air extérieur ($T_{air}$) et la température moyenne du ballon ($T_{eau}$). La démarche consiste à passer de :

à :

On remarquera que le COP instantané, voire l'énergie thermique produite, peut être accessible dans les nouvelles générations de chauffe-eau thermodynamiques connectés. Toutefois les problèmes d'interopérabilité, liés à l'absence d'uniformisation des protocoles employés par les fabricants, rendent l'invention attractive car moins onéreuse à mettre en place. Elle évite le développement d'un gestionnaire multi-protocolaire compatible avec tous les produits du marché. En effet le modèle paramétrable développé est valable pour tous les CET sur air extérieur à vitesse fixe utilisant le réfrigérant R134A.

Selon le même processus, il est possible d'identifier un modèle de Coefficient de Performance (COP) pour les chauffe-eaux sur air ambiant. La plage de variation de la température d'un local non chauffé moins étendue facilite alors la génération du modèle.

Au-deçà d'une température d'arrêt ou lorsque la consigne de température est supérieure à la température maximale de fourniture d'eau chaude par la pompe à chaleur (température maximale qui dépend de la température de la source froide), l'appoint joule - dans les modes où il est autorisé à fonctionner - prend le relais. La puissance de l'appoint étant de l'ordre de 3 fois celle du compresseur, il est facile de discriminer la source de production à chaque pas de mesure. Ainsi :

$$Si\ P_{el\ mesurée} \gg P_{el\ comp\ max},\ alors\ P_{th} = P_{el\ mesurée}$$

Sinon,

$$P_{th} = P_{el\_comp} * COP\left(T_{air},\ \frac{P_{el\_comp}}{P_{el\ comp\ max}}\right)$$

avec

$$P_{el\ comp} = P_{el\ mesurée} - P_{el\ ventilateur}$$

Si la puissance du ventilateur n'est pas indiquée dans la notice technique du CET, alors nous choisissons une valeur par défaut, par exemple :

$$P_{el\ ventilateur} = P_{el\ comp\ max}/P_{el\ comp\ max\ ref} * P_{el\ ventilateur\ ref}$$

I.1. ESTIMATION DE LA DEMANDE THERMIQUE PREVISIONNELLE

Dans les deux cas, le cumul journalier de la puissance thermique transférée au stock ECS correspond à la couverture des besoins et des pertes. L'archivage de ces cumuls, par type de jour (lundi, mardi, mercredi, etc.), permet de construire un modèle statistique d'estimation d'énergie thermique à produire pour assurer le confort des clients. Il est préférable de la surestimer en prenant une marge (typiquement Km=20%) et une valeur minimale (typiquement la moitié de la valeur du contenu énergétique du ballon).

$$E_{th}(jour\ J) = \max(E_{th\ min}\ ; (1 + Km) * \max(E_{th}(jour = jour\ J)))$$

/2

## II. ESTIMATION DU SURPLUS D'ENERGIE RENOUVELABLE A H+24

### II.0 PREVISION DE LA PRODUCTION D'ENERGIE RENOUVELABLE, NOTAMMENT D'ENERGIE PHOTOVOLTAIQUE

L'invention propose d'utiliser un modèle physique paramétré selon les caractéristiques de l'installation génératrice d'énergie électrique, par exemple d'une installation photovoltaïque, (type de modules, surface ou puissance crête...). Les entrées du modèle sont par exemple pour une installation photovoltaïque les flux solaires diffus et global, la température extérieure et la vitesse du vent. Si besoin, les flux solaires - non disponibles sur certains serveurs météorologiques - peuvent être reconstitués à partir des prévisions du taux de couverture nuageuse.

### II.1 PREVISION DE LA CONSOMMATION DES USAGES HORS CHARGE PILOTEE

L'invention propose d'utiliser un modèle auto-adaptatif qui détermine pour chaque type de jour l'estimateur naïf le plus performant (par exemple J=J-1, J=J-7, J = moyenne(J-7, J-14)). Il s'agit de celui qui minimise l'écart quadratique entre la mesure et la prévision sur la période solaire (typiquement entre 8h et 22).

II.2 Le profil de surplus d'énergie renouvelable disponible pour la charge pilotée non modulable est la différence (positive ou nulle) entre les deux prévisions. A chaque pas de temps, surplus PV = max(0, production PV -consommation des autres usages)

## III. CALCUL DES CRITERES D'ACTIVATION/DESACTIVATION DE LA CHARGE PILOTEE NON MODULABLE

Le seuil optimal d'activation de la charge est calculé à partir de la prévision d'énergie thermique à fournir et de la prévision du surplus d'énergie renouvelable (par exemple au pas horaire ou demi-horaire).

Lorsque le surplus d'énergie renouvelable est important, le seuil relatif peut être supérieur à 30%. Il peut être égal à 100% avec les chauffe-eau thermodynamiques, la puissance du compresseur étant généralement comprise entre 400 et 600W. Il est mis à jour régulièrement (toutes les heures ou demi-heures) avec le rafraîchissement des prévisions météorologiques, celui de l'énergie thermique résiduelle à fournir et de l'énergie thermique disponible prévisionnelle :

$$E_{th\_resid}(jour\ J) = E_{th}(jour\ J) - \int_{0}^{t} P_{th}(t)dt$$

$$E_{th\_dispo}(jour\ J) = \int_{t}^{HeureFin} P_{th}(t)dt\ si\ P_{el\_surplus} \geq seuil * P_{el\_ballon}$$

Le seuil optimal est la plus grande valeur qui satisfait la condition :

[cond. 1]

Lorsque le surplus d'énergie renouvelable est insuffisant, le seuil est fixé à une valeur minimale (typiquement 30%).

Lorsque la condition précédente [cond. 1] ne peut plus être assurée (test toutes les 10 minutes), la charge est aussitôt activée quelle que soit la valeur du surplus d'énergie renouvelable. Cela s'apparente à une marche forcée. On préfère prendre une marge (par exemple 60 à 30 minutes), notamment pour le chauffe-eau thermodynamique, compte tenu des incertitudes du Coefficient de Performance liées à celles des prévisions météorologiques. Cette marge peut-être auto-adaptative en fonction de l'écart entre l'heure de fin de chauffe réelle et théorique (HeureFin).

S'il n'y a pas eu de chauffe complète dans la journée, alors il est possible de poursuivre l'autorisation de fonctionnement de la charge après l'heure théorique de fin ou de procéder à une relance nocturne (typiquement pendant les heures creuses), en particulier si l'énergie thermique délivrée au ballon est très inférieure à l'estimation d'énergie thermique journalière. Dans ce cas, tout ou partie de la consommation nocturne doit être rattachée à celle du jour J dans l'archivage.

La saturation du ballon est soit connue (information récupérée du thermostat), soit déduite s'il est constaté un appel de puissance quasi nul pendant au moins 1 minute malgré une consigne de puissance strictement positive (état d'activation de la charge).

Variante 1

Selon la puissance électrique, notamment puissance photovoltaïque, installée et le profil de consommation des clients, il peut être avantageux d'anticiper une chauffe nocturne lorsque le surplus d'énergie prévisionnel est faible. Cette pré-chauffe peut être effectuée à une consigne de température réduite.

Variante 2

Le contact Heures Pleines / Heures Creuses des chauffe-eau thermodynamiques existants ne commande pas systématiquement l'arrêt de la pompe à chaleur lors du passage en Heures Pleines. L'arrêt peut être garanti en leurrant la sonde de régulation du ballon en appliquant à la régulation interne un signal simulant que la température de l'eau est supérieure à la consigne. A défaut, l'algorithme peut alors prévoir le placement optimal de la chauffe du chauffe-eau sous forme d'un seul bloc. On choisit alors l'heure d'activation qui minimise le soutirage du réseau d'alimentation électrique parmi les scénarios simulés (typiquement activation du chauffe-eau à une heure HeureDébut comprise entre 10h et 16h au pas demi-horaires).

On remarquera que la fonction de leurre peut également être utilisée pour abaisser la consigne de température lors des éventuelles chauffes nocturnes et préserver ainsi un gisement de consommation (ou temps de fonctionnement) minimal en journée. Il s'agit d'une brique algorithmique pour améliorer l'autoconsommation d'énergie renouvelable, notamment de l'énergie photovoltaïque, prenant en compte les contraintes de « non » flexibilité des équipements (absence de modulation de puissance).

On va maintenant décrire la structure de l'installation illustrée sur la figure annexée.

Le système représenté sur la figure annexée est adapté pour mettre en œuvre le procédé précité conforme à la présente invention. Il comprend:

- Une source locale 10 d'énergie renouvelable, par exemple formée d'au moins un panneau photovoltaïque. La production de cette source 10 est soit injectée sur le réseau d'alimentation électrique 20 (typiquement un réseau 220V, 50Hz), soit autoconsommée par le propriétaire de la source 10, par exemple dans un habitat 30.
- Un système 12 de mesure de production permettant de connaître la production de la source d'énergie renouvelable 10 (par exemple un compteur).
- Une charge électrique 32 non modulable en puissance (typiquement un chauffe-eau joule régulé en Tout ou Rien, ou un chauffe-eau thermodynamique à vitesse fixe ou variable mais sans commande externe de la fréquence).
- Un système 34 permettant de mesurer la consommation d'énergie (par exemple un compteur), dont les données pourront être exploitées par un organe de contrôle 36. La transmission des données entre le système de mesure et l'organe de contrôle peut se faire de façon matérielle (filaire) ou immatérielle (radio par exemple).
- Un organe 33 de mesure de la consommation d'électricité de la charge 32 (par exemple un tore d'intensité).
- Un organe de contrôle 36. En cas d'autoconsommation de la production fournie par la source locale 10, l'organe de contrôle 36 permet d'optimiser l'utilisation de l'énergie produite par la source d'énergie renouvelable 10. L'organe de contrôle 36 intègre les informations issues de différentes sources : système de mesure de consommation/production 12 et 34, organe de mesure 33, cloud, etc. et permet de calculer au plus juste les critères d'enclenchement de la charge électrique 32 pour absorber la production d'énergie en minimisant le soutirage sur le réseau 20.

L'organe de contrôle 36 envoie ensuite les commandes de pilotage à un organe d'activation/désactivation 31. Il peut s'agir d'un relais de puissance coupant l'alimentation de la charge 32, d'un contact sec en façade de l'équipement ou d'une autre entrée prévue à cet effet...

La communication entre l'organe de contrôle 36 et l'organe d'activation/désactivation 31 peut se faire de façon matérielle (filaire) ou immatérielle (radio, ..).

L'organe de contrôle 36 et l'organe de pilotage 31 peuvent être intégrés dans un même dispositif. De même ces organes peuvent être directement intégrés dans la charge électrique 32.

Le système peut également être connecté au cloud pour permettre de véhiculer des informations permettant d'enrichir l'algorithme intégré dans l'organe de contrôle 36 (taux de couverture nuageuse, vitesse du vent...).

La connaissance du débit d'eau chaude soutirée permet d'améliorer les prévisions d'énergie thermiques (journalières et résiduelles) à apporter.

Dans la description qui précède on estime la puissance thermique transférée par le chauffe-eau thermodynamique en multipliant la puissance électrique consommée par le CET (et mesurée localement) par un modèle ou la valeur du Coefficient de Performance (COP).

On va maintenant décrire une variante d'estimation de cette puissance thermique qui met en oeuvre une méthode de prévision de puissance thermique d'un Chauffe-Eau Thermodynamique (CET) sur air extérieur à l'aide d'une équation multi-paramétrique. Cette équation est obtenue par régression sur un modèle dynamique détaillé développé sous Dymola.

La description qui suit présente le modèle polynomial d'ordre deux de la puissance thermique ainsi que la méthode d'extrapolation permettant de généraliser ce modèle - obtenu à partir de données issues de la modélisation détaillée d'un modèle de CET air/eau de référence - à tout autre CET sur air extérieur.

L'extrapolation est un recalage qui utilise des informations de temps de chauffe et de volume du réservoir disponibles dans la notice constructeur du chauffe-eau thermodynamique.

Dans certaines conditions de température extérieure, il est nécessaire d'ajouter une durée supplémentaire pour prendre en compte les phases de dégivrage par inversion de cycle pendant lesquelles la puissance thermique délivrée par le groupe thermodynamique n'est pas injectée dans le ballon d'eau chaude mais est utilisée pour enlever la pellicule de givre qui se forme par « condensation » sur l'évaporateur (unité extérieure).

Selon la méthode antérieure, la puissance thermique Pth était donc estimée par le produit de la puissance électrique mesurée « Pel mesurée » et de la valeur du Coefficient de Performance « modèle_COP », soit : Pth = Pel_mesurée * modèle_COP (Pel, Temp_air_ext)

Selon la variante exploitant un modèle polynomial d'ordre deux de la puissance thermique, on obtient directement la puissance thermique Pth = modèle_Pth (Pel_mesurée, Temp_air_ext).

Par ailleurs de préférence dans le calcul du temps de chauffe, tel que l'intégrale de t à t+durée_chauffe de la Pth couvre les besoins thermiques, il faut ajouter un délai supplémentaire à la durée_de chauffe pour prendre en compte les phases de dégivrage.

La variante qui procède par exploitation d'un modèle polynomial de la puissance thermique s'avère plus robuste que celle précédemment décrite qui estime la puissance thermique transférée par le chauffe-eau thermodynamique en multipliant la puissance électrique consommée par le CET (et mesurée localement) par un modèle ou la valeur du Coefficient de Performance (COP).

La variante qui suit concerne une méthode de prévision de puissance thermique d'un Chauffe-Eau Thermodynamique (CET) sur air extérieur à l'aide d'une équation multi-paramétrique. Cette équation est obtenue à partir d'une régression sur un modèle dynamique plus détaillé développé sous Dymola avec la bibliothèque de composants thermo-hydrauliques, TIL. Une comparaison de l'équation est ensuite faite au modèle détaillé et à des données expérimentales au cours de périodes de montée en température du ballon sur une large plage de fonctionnement. Une erreur moyenne sur la puissance thermique de 3.04% est obtenue avec des données expérimentales et la quasi-totalité des points prédits par l'équation est située dans une marge d'erreur de +/-10%. Ces résultats mettent en lumière la possibilité d'utiliser cette équation pour de la prévision à partir de données réelles. Cette méthode présente donc un grand intérêt dans la prévision du temps de chauffe avec une équation simple et extrapolable à différents CET.

La méthode de modélisation simplifiée est la suivante.

La puissance thermique au condenseur est estimée avec une fonction polynomiale (1) d'ordre 2 comme fonction de base imposée sous la forme:

$$
(1)
$$

$$
\dot{Q}_{cond,ref}\left( n_{comp}, \frac{Pe_{comp}}{Pe_{comp,max}}, T_{air} \right)
$$

$$
= a_0 + a_1 n_{comp} + a_2 n_{comp}{}^2 + a_3 \left(\frac{Pe_{comp}}{Pe_{comp,max}}\right) + a_4 \left(\frac{Pe_{com}}{Pe_{comp,\iota}}\right.
$$

$$
+ a_5 T_{air} + a_6 T_{air}{}^2 + a_7 T_{air}\left(\frac{Pe_{comp}}{Pe_{comp,max}}\right) + a_8 T_{air} n_{comp}
$$

$$
+ a_9 \left(\frac{Pe_{comp}}{Pe_{comp,max}}\right) n_{comp}
$$

Dans laquelle :

Les coefficients $a_0$ à $a_9$ sont des coefficients définis par tous moyens appropriés, par exemple avec le logiciel Python avec une régression utilisant la fonction « CurvFit » et avec les données issues de la modélisation détaillée d'un modèle de CET air/eau de référence - modifié avec un compresseur à vitesse variable de 13cm3 (validé sur une plage de -3°C à 20°C d'air extérieur),
$Pe_{comp}$ représente la puissance électrique au compresseur,
$n_{comp}$ représente la vitesse de rotation du compresseur,
$T_{air}$ représente la température de l'air.

A titre d'exemple en utilisant comme source une Thèse K. R. Deutz (2018), on obtient la matrice suivante pour ces coefficients ao à $a_9$:
([ 3.08412501e+04, -1.14991576e+02, -8.49391256e-02, -2.86343628e+03, 9.61324555e+00, -2.42795220e+02, 4.69410148e-01, 5.88808434e+00, 6.01048080e-01, 2.04967300e+00])

Une extrapolation est réalisable à partir de la fonction (1) de référence par rapport aux données du catalogue du constructeur pour tout autre CET sous la forme suivante donnée par l'équation (2) (en supposant que la variation des pertes thermiques du ballon au cours de la chauffe est prise en compte par la variation de $t_{heating}$):

$$(2) \quad \dot{Q}_{cond} = \frac{V_{tank}}{V_{tank,ref}} \frac{t_{heating,ref}}{t_{heating}} \dot{Q}_{cond,ref}$$

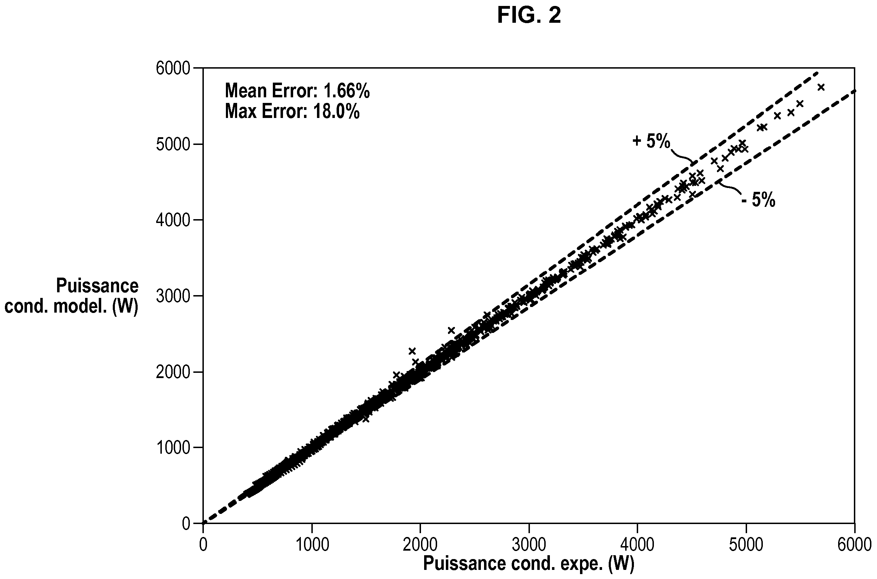

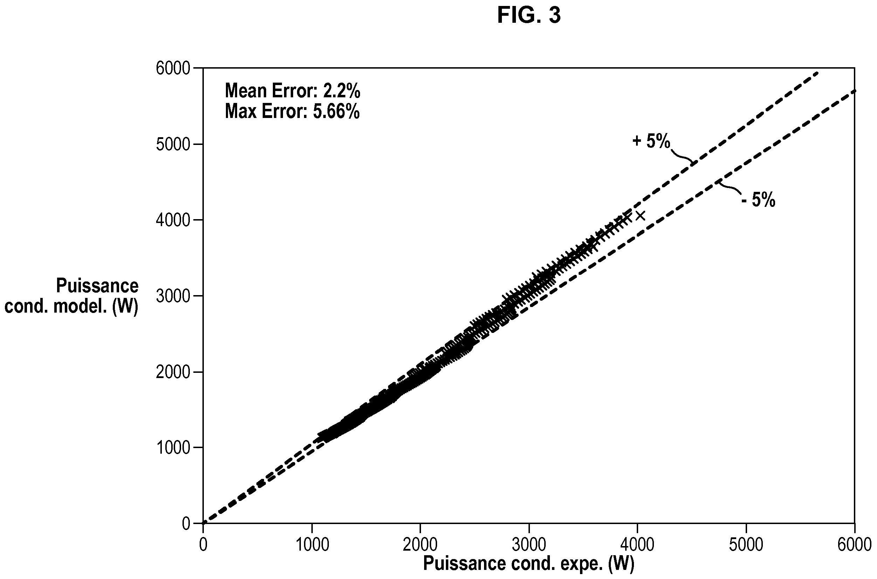

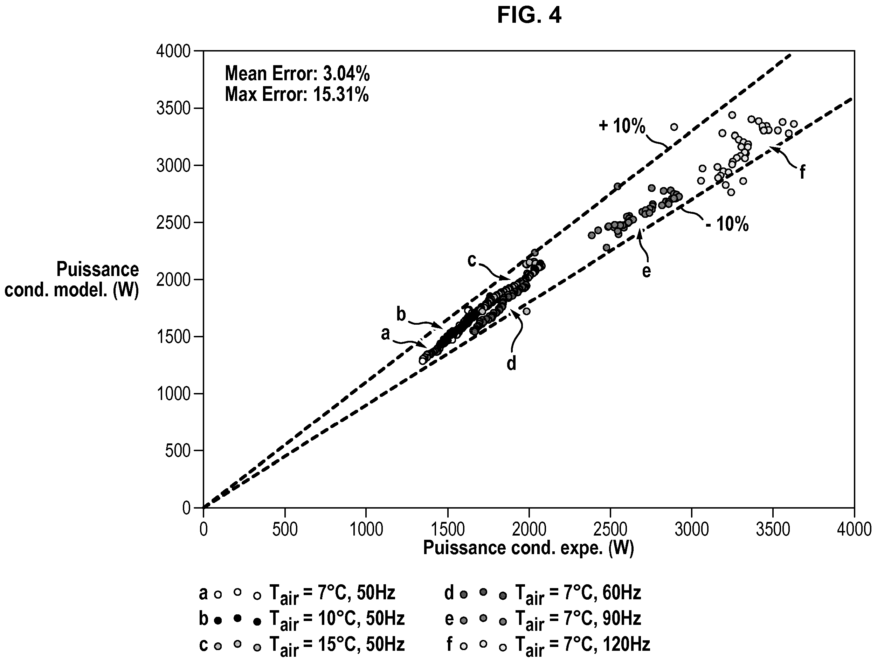

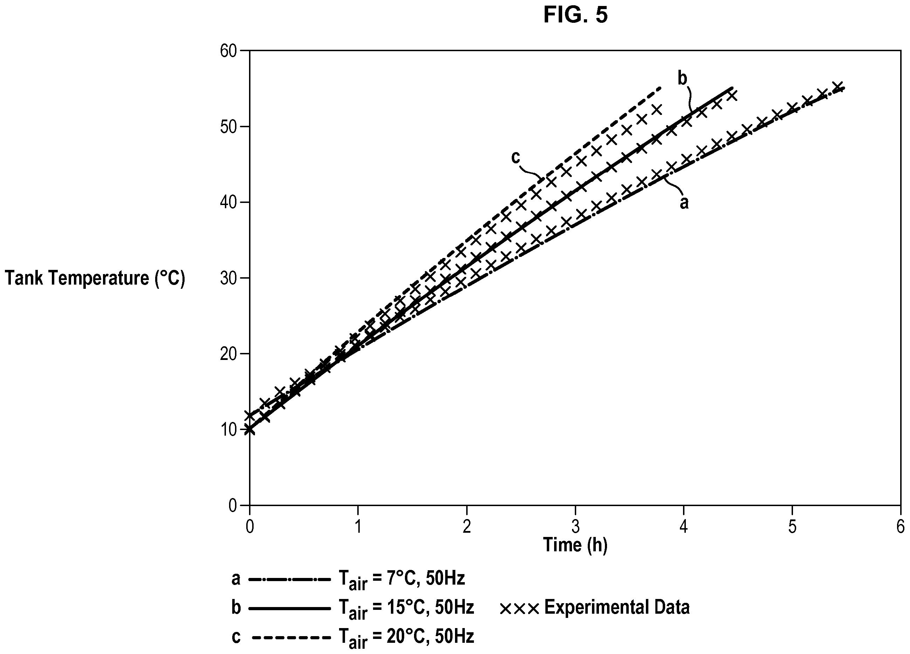

On va maintenant procéder, en regard des figures 2 et 3, à une comparaison de la méthode proposée selon l'invention exploitant un modèle polynomial avec des données simulées issues d'un modèle détaillé TIL, afin de démontrer la fiabilité de la méthode ainsi proposée dans le cadre de l'invention.
La figure 2 qui représente la comparaison entre la puissance donnée par l'équation (1) et le modèle détaillé développé avec TIL sur une plage de 30Hz a 120Hz et une température d'air de -5°C à 30°C (sans dégivrage), pour un compresseur de 13cc montre une erreur moyenne de 1,66% et une erreur maximale de 18%, ce qui valide la méthode.
La figure 3 qui représente la comparaison entre la puissance donnée par l'équation (2) et le modèle détaillé développé avec TIL sur une plage de température d'air de -5°C à 30°C (sans dégivrage), pour un compresseur de 17cc montre une erreur moyenne de 2,2% et une erreur maximale de 5,66%, ce qui valide la méthode.
On va maintenant procéder, en regard des figures 4 et 5, à une comparaison de la méthode proposée selon l'invention exploitant un modèle polynomial avec des données réelles, afin de démontrer à nouveau la fiabilité de la méthode ainsi proposée dans le cadre de l'invention.
La figure 4 représente une comparaison entre la puissance donnée par l'équation (1) et des données expérimentales obtenues en laboratoire variant la vitesse du compresseur et la température d'air (sans dégivrage).
Avec un compresseur à vitesse variable de 13cm3 qui sert de référence, $Pe_{comp, max, ref}$ = 670 W (50Hz, T_air=7°C, T_ballon=55°C), $T_{heating, ref}$ =25750s
Le temps de chauffe en température pour un compresseur de 17.6cm3 $Pe_{comp, max}$ =1000, $T_{heating}$ = 19500S
La figure 5 représente une comparaison expérimentale avec des températures de ballon obtenues par l'équation (2) couplé avec un modèle de ballon en variant la température d'air (sans dégivrage).
Elle compare les temps de chauffe pour un CET de référence avec un compresseur d'origine de 17.6cm3 sans inverter, pour valider la méthode d'extrapolation définie par l'équation (2). La comparaison est faite en comparant les montées en température à l'aide d'un ballon 1D modélisé sous modelica pour différentes températures d'air à l'évaporateur. Globalement l'adéquation observable en figure 5 entre les données d'essai et de simulation valide la méthode proposée. Un écart de l'ordre de 2.5°C seulement est observable pour une température d'air de 20°C.
Les principaux écarts observables sur les figures 4 et 5 sont dus aux simplifications faites avec la modélisation proposée dans le cadre de l'invention :

- Non prise en compte des phases inertielles (démarrage à froid) et dynamiques (pompage du détendeur)
- approximation du modèle (erreur absolue de 1.6%, erreur max de 18 %),
- Extrapolation des performances du compresseur 13cc au modèle de compresseur 17cc
- Gamme de données compresseur disponibles pour la construction du modèle sur la plage suivante :

  ∘ de 40°C de condensation à 60°C de condensation (équivalent à 30°C d'eau jusqu'à 55°C, à pincement non constant)

○ de -10°C à 10°C de température d'évaporation (soit environ -5°C jusqu'à 20°C d'air, à pincement non constant)
○ de 30Hz à 90Hz et extrapolation à 120Hz

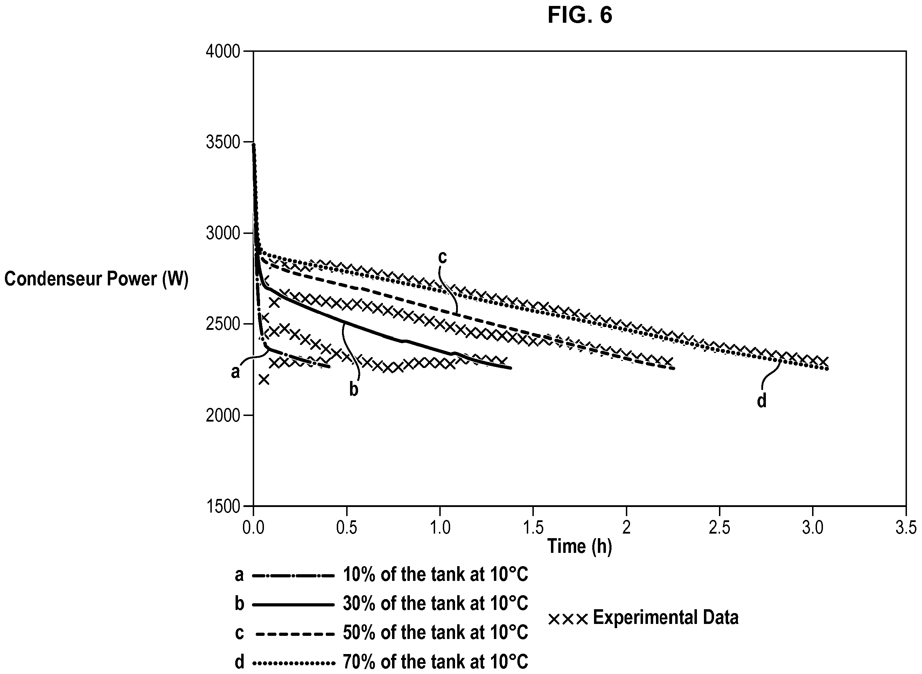

On va maintenant procéder, en regard de la figure 6, à une estimation de l'impact de la stratification initiale en fonction de l'état de charge du ballon.

La question est de vérifier que le modèle proposé dans le cadre de l'invention est aussi utilisable pour des chauffes avec un ballon initialement stratifié. Ceci est le cas lorsque le ballon n'a pas été complètement vidé avant la relance. Les inventeurs ont réalisé plusieurs simulations avec différentes positions de la thermocline (limite entre la zone de haute température et la zone de basse température dans le ballon) comparées aux données du modèle détaillé.

La figure 6 est une comparaison entre la puissance condenseur obtenue par l'équation (1) et des données du modèle détaillé TIL en variant la position de la thermocline.

Etant donné que le modèle est établi pour un seul nœud de température dans le ballon, on observe un décalage en prévision de puissance lorsqu'il y a une stratification en face du condenseur (période de thermocline basse). Cet écart peut atteindre des valeurs de l'ordre de 5% de la puissance expérimentale (soit au maximum 150W) selon la position de la thermocline. Cependant il est vite résorbé au cours de la chauffe, lorsque les températures s'homogénéisent, la prévision est alors en meilleure adéquation avec les données de simulation. Lorsque la relance est faite avec une thermocline supérieure à la hauteur du condenseur (en violet sur la figure), la prévision est en meilleure adéquation.

On va maintenant aborder l'intérêt de prendre en compte les phases de dégivrage par inversion de cycle.

La formation de givre provoque une augmentation de la résistance thermique de la batterie de la pompe à chaleur avec l'air, ce qui en l'absence de dégivrage cause une perte de puissance du système, et une dégradation de la performance. Les phases de dégivrage des CET sont globalement réalisées par inversion de cycle. La méthode la plus basique consiste en un dégivrage horodaté avec une durée d'inversion fixe. L'évaporateur sert alors temporairement de condenseur pour sublimer la glace et le condenseur sert d'évaporateur qui puise l'énergie nécessaire au dégivrage dans le ballon. La température de déclenchement utilisé pour le CET de référence -est de 5°C d'air mais peut être variable d'un CET à l'autre.

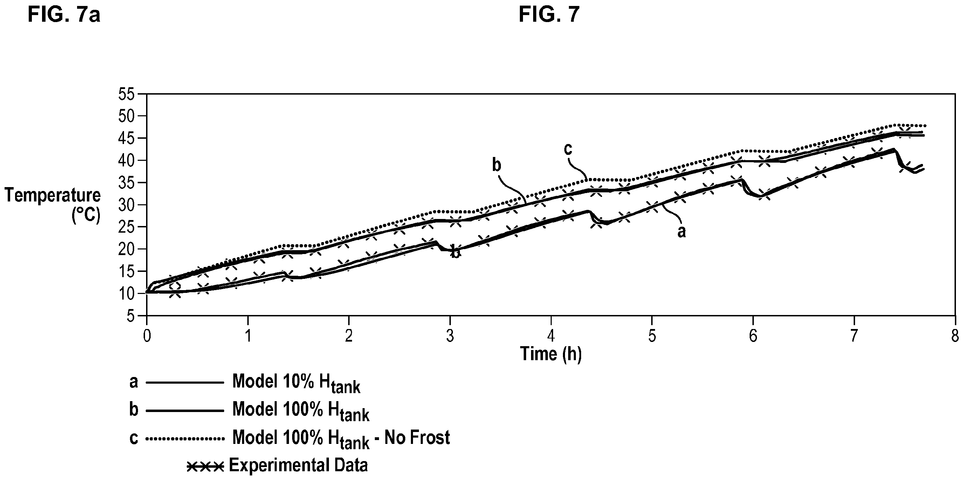

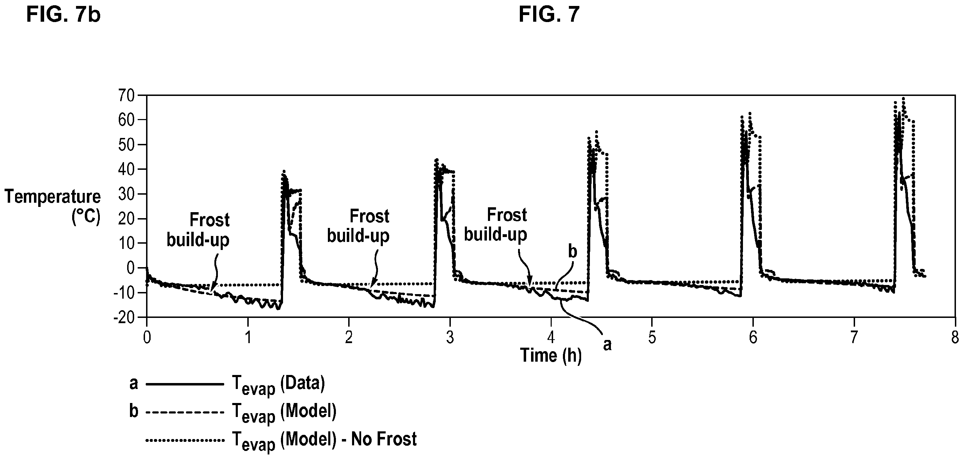

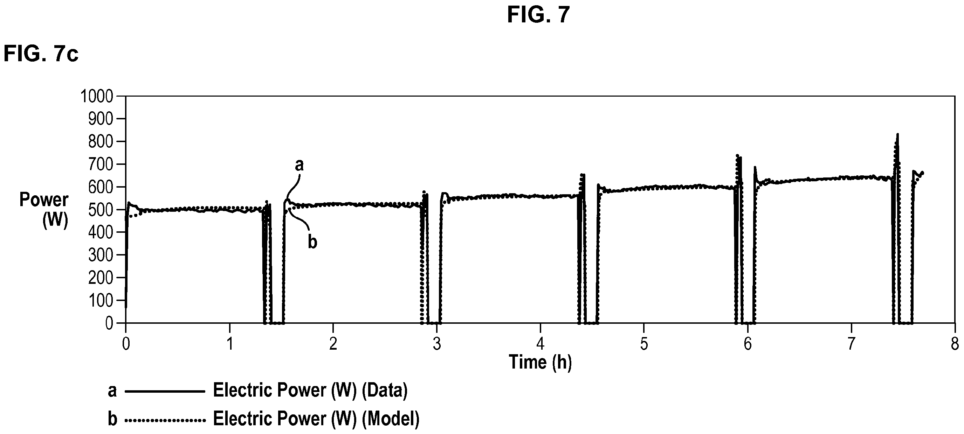

Pour étudier le phénomène de givrage et de dégivrage sur le CET, dans la figure 7, on réalise une étude pour une montée de température d'un ballon à 10°C jusqu'à 55°C et une température d'air de 0°C. On réalise une inversion de cycle horodaté toutes les 4800 secondes, d'une durée de 10minutes, conformément à la documentation du système. Enfin, on réalise la même procédure avec le modèle détaillé TIL, en négligeant la croissance du givre et en la prenant en compte.

D'un point de vue purement phénoménologique, en période de givrage, il est possible d'observer que la température d'évaporation décroit en début de chauffe alors que la température d'air est maintenue constante. Ceci est dû au détendeur qui régule la puissance échangée à l'évaporateur par variation de son ouverture. Lorsque le givre s'accumule, la résistance thermique augmente et le détendeur se ferme ce qui cause une chute de la température d'évaporation. Au bout de 4800 secondes, le cycle s'inverse, et la température dans le ballon en face du condenseur chute, signe que le condenseur puise alors de l'énergie au ballon pour assurer le dégivrage de la batterie.

Au bout de 10 minutes, la chauffe reprend, et à nouveau la température d'évaporation se met à chuter provoqué par une reformation de givre. Ceci semble se répéter jusqu'au 3eme cycle de dégivrage. Après cela la température d'évaporation reste plus constante, signe d'absence de givre pour les plus hautes températures d'eau. Si les phases de dégivrage et l'inversion de cycle ne sont pas prises en compte, on observe que le temps de chauffe est largement sous-estimé avec le modèle de base proposé dans le cadre de l'invention, avec un écart de 2h sur un temps de chauffe global de 10°C à 55°C. Ceci est dû à deux phénomènes, tout d'abord la durée intrinsèque du dégivrage et enfin la période nécessaire afin de remonter à la température initiale du ballon avant le dégivrage, dû au refroidissement du ballon provoqué par le dégivrage observable dans la figure 7.

C'est pourquoi, afin de prévoir le temps de chauffe à plus basse température d'air, il faut rajouter ces deux périodes d'arrêt, de la manière suivante :

$$(3)$$

$$\Delta t_{dégivrage} = n_{inversion}(\Delta t_{inversion} + \Delta t_{reinit}) + cste$$

Avec $n_{inversions}$, le nombre d'inversions de cycles estimés sur la période de temps de chauffe, $\Delta t_{reinit}$ le temps nécessaire pour remonter à la température initiale du ballon et este un coefficient de sécurité pour assurer le confort.

En incorporant cette période d'arrêt dans le modèle on peut observer que la prévision pour le temps de chauffe est meilleure.

La figure 7 intègre une phase de dégivrage modélisée avec une phase d'arrêt de machine donné par l'équation (3), comparé avec une chauffe sans arrêt et des données expérimentales pour une température d'air de 0°C et une humidité relative de 87%.

L'écart persistant, ici de 25 minutes, s'explique par la persistance du givre pour certaines conditions d'essai comme observé dans la figure 7 pour le cas ou dans le modèle détaillé la croissance de givre est négligée. Un modèle détaillé (figure 7) permet de prendre ceci en compte de manière plus réaliste. Cependant comme observé dans la figure 7, le givrage, détectable par la chute de température d'évaporation est surtout impactant à basse température de ballon, soit au début de la chauffe. Globalement, par la méthode de pilotage par hystérésis employé la température de ballon est généralement maintenue au-dessus de 40°C. Dans ces cas-là, la croissance de givre semble bien moins significative et sa persistance peut donc être négligée.

Pour les phases avec auxiliaire, en période de température d'air froide et de température de ballon haute, l'auxiliaire du CET peut prendre le relais pour compléter la chauffe. Pour l'Atlantic odyssée split, ceci est réalisé pour une température inférieure à 2°C (donnée trouvable généralement dans la documentation du constructeur) et en fonction de la température dans le ballon. Dans un algorithme de prévision il convient de prendre en compte la puissance fixe de cette résistance qui est généralement donnée pas les constructeurs.

En résumé on a proposé ci-dessus une variante qui exploite une fonction de calcul de puissance thermique du condenseur basée par exemple sur un modèle détaillé réalisé sous Modelica avec la librairie TIL. La fonction permet, couplée avec un algorithme de prévision, d'estimer le temps de chauffe pour des CET sur air extérieur R134a avec un échangeur manteau. Ceci étant la configuration la plus générique sur le marché, une méthode d'extrapolation est présentée qui permet d'étendre la fonction à tout autre CET de ce type et d'inclure la variation de vitesse du compresseur. Une validation de la méthode est faite avec des données expérimentales et une bonne adéquation est trouvée dans les phases de montée en température, en différentes conditions :

- Variant la température d'air et la vitesse de compresseur, un écart moyen de 3% est obtenu en puissance thermique,
- En extrapolant la fonction à une autre cylindrée de compresseur, le temps de chauffe est bien prédit sur la gamme de température testée, un écart maximal en température de ballon de 2.5°C en fin de chauffe est constaté pour une chauffe de 10°C à 55°C,
- En partant d'un ballon stratifié, un écart maximum de 5% en puissance thermique est obtenu,
- En phase de dégivrage, un temps de chauffe supplémentaire est rajouté afin de prendre en compte le décalage induit par l'inversion de cycle, et permet de mieux prédire la durée de montée en température du ballon. Un écart persistant de l'ordre de 25 minutes est observable au cours d'une chauffe complète de 10°C à 55°C.

L'invention permet de répondre aux demandes d'utilisateurs souhaitant maximiser la consommation locale de leur installation d'énergie électrique fondée sur une source d'énergie renouvelable, notamment une installation à base de panneaux photovoltaïques. Elle permet en particulier une faible dépendance vis-à-vis du réseau d'alimentation électrique et d'éventuelles hausses des prix.

La présente invention permet notamment de réduire le soutirage indésirable d'énergie à partir du réseau de distribution électrique.

Bien entendu la présente invention n'est pas limitée aux modes de réalisation particuliers qui viennent d'être décrits.

**Revendications**

1. Système d'alimentation électrique comprenant :

   - un réseau d'alimentation électrique (20),
   - au moins une source locale (10) d'énergie renouvelable, dont la production est soit injectée sur le réseau d'alimentation électrique (20), soit autoconsommée par le propriétaire de la source (10),
   - un système (12) de mesure de production permettant de connaître la production de la source d'énergie renouvelable (10),
   - une charge électrique (32) non modulable en puissance,
   - un système (34) permettant de mesurer la consommation d'énergie,
   - un organe (33) de mesure de la consommation d'électricité de la charge (32),
   - un organe de contrôle (36) qui intègre les informations issues des systèmes de mesure précités (12, 34, 33) et calcule les critères d'enclenchement de la charge électrique (32) pour absorber la production d'énergie en minimisant le soutirage sur le réseau (20), l'organe de contrôle comprenant

   1) des moyens conçus pour la réalisation d'une estimation à un horizon de temps déterminé, de la production d'énergie électrique renouvelable, en utilisant un modèle de simulation de l'installation de production d'énergie électrique renouvelable, d'une part et des prévisions météorologiques d'autre part,

2) des moyens conçus pour la réalisation d'une estimation à l'horizon de temps déterminé de la consommation des usages hors charge pilotée par auto-apprentissage à partir d'un historique glissant de consommation,

3) des moyens conçus pour la prévision d'une puissance thermique de la charge électrique (32) non modulable en puissance, à l'aide d'une équation multiparamétrique, qui exploite un modèle polynomial d'ordre deux de la puissance thermique d'un chauffe-eau thermodynamique du type

$$\dot{Q}_{cond,ref}\left(n_{comp}, \frac{Pe_{comp}}{Pe_{comp,max}}, T_{air}\right)$$
$$= a_0 + a_1 n_{comp} + a_2 n_{comp}^2 + a_3\left(\frac{Pe_{comp}}{Pe_{comp,max}}\right) + a_4\left(\frac{Pe_{comp}}{Pe_{comp,max}}\right)^2$$
$$+ a_5 T_{air} + a_6 T_{air}^2 + a_7 T_{air}\left(\frac{Pe_{comp}}{Pe_{comp,max}}\right) + a_8 T_{air} n_{comp}$$
$$+ a_9\left(\frac{Pe_{comp}}{Pe_{comp,max}}\right)n_{comp}$$

, où les coefficients $a_0$ à ag sont des coefficients définis par tous moyens appropriés, $Pe_{comp}$ représente une puissance électrique d'un compresseur, $n_{comp}$ représente une vitesse de rotation d'un compresseur, $T_{air}$ représente une température de l'air,

4) des moyens conçus pour la réalisation d'une estimation du temps de fonctionnement de la charge pilotée à partir d'un historique glissant de consommation d'électricité, de prévisions de la température extérieure à l'horizon de temps déterminé, et d'un modèle d'estimation de la puissance thermique produite par un condenseur d'un chauffe-eau thermodynamique,

5) des moyens conçus pour la réalisation d'un calcul dynamique des critères d'activation de la charge pour minimiser le soutirage sur le réseau d'alimentation électrique et maximiser l'autoconsommation de l'énergie photovoltaïque,

de sorte que en cas d'autoconsommation de la production fournie par la source locale (10), l'organe de contrôle (36) permet d'optimiser l'utilisation de l'énergie produite par la source d'énergie renouvelable (10).

**2.** Système selon la revendication 1, **caractérisé en ce que** l'organe de contrôle (36) comprend :

1) des moyens conçus pour réaliser une estimation du temps de fonctionnement de la charge pilotée à partir d'un historique glissant de consommation d'électricité, d'un modèle de coefficient de performance, et de prévisions de la température extérieure à un horizon de temps déterminé,

2) des moyens conçus pour réaliser une estimation à un horizon de temps déterminé, du surplus d'énergie renouvelable, par différence entre :

. Une estimation à l'horizon de temps déterminé, de la production photovoltaïque en utilisant un modèle de simulation de l'installation photovoltaïque d'une part et des prévisions météorologiques d'autre part,
. Une estimation à l'horizon de temps déterminé, de la consommation des usages hors charge pilotée par auto-apprentissage à partir d'un historique glissant de consommation, et

3) des moyens conçus pour opérer un calcul dynamique de deux critères d'activation de la charge pour minimiser le soutirage sur le réseau d'alimentation électrique et maximiser l'autoconsommation d'énergie photovoltaïque.

**3.** Système selon l'une des revendications 1 ou 2, **caractérisé en ce que** la charge électrique (32) non modulable en puissance est un chauffe-eau thermodynamique à vitesse fixe ou variable mais sans commande externe de la fréquence.

**4.** Système selon l'une des revendications 1 à 3, **caractérisé en ce que** l'au moins une source locale (10) d'énergie renouvelable est formée d'au moins un panneau photovoltaïque, et **en ce que** l'organe de contrôle comprend des moyens conçus pour la réalisation d'une estimation à un horizon de temps déterminé, de la production d'énergie électrique photovoltaïque, en utilisant un modèle de simulation de l'installation de production d'énergie électrique photovoltaïque, d'une part et des prévisions météorologiques d'autre part.

**5.** Procédé d'optimisation de l'utilisation d'une énergie renouvelable disponible dans le système conforme à l'une des revendications 1 à 4, en vue notamment de l'optimisation de l'autoconsommation d'un excédent de production d'énergie électrique à base d'une énergie renouvelable, **caractérisé en ce qu'**il comprend les étapes suivantes :

1) Réalisation d'une estimation à un horizon de temps déterminé, de la production d'énergie électrique renouvelable, en utilisant un modèle de simulation de l'installation de production d'énergie électrique renouvelable, d'une part et des prévisions météorologiques d'autre part,

2) Réalisation d'une estimation à l'horizon de temps déterminé de la consommation des usages hors charge pilotée par auto-apprentissage à partir d'un historique glissant de consommation,

3) Prévision de la puissance thermique d'une charge électrique non modulable en puissance, à l'aide d'une équation multiparamétrique, qui exploite un modèle polynomial d'ordre deux de la puissance thermique d'un chauffe-eau thermodynamique du type

$$\dot{Q}_{cond,ref}\left(n_{comp}, \frac{Pe_{comp}}{Pe_{comp,max}}, T_{air}\right)$$
$$= a_0 + a_1 n_{comp} + a_2 n_{comp}{}^2 + a_3\left(\frac{Pe_{comp}}{Pe_{comp,max}}\right) + a_4\left(\frac{Pe_{comp}}{Pe_{comp,max}}\right)^2$$
$$+ a_5 T_{air} + a_6 T_{air}{}^2 + a_7 T_{air}\left(\frac{Pe_{comp}}{Pe_{comp,max}}\right) + a_8 T_{air} n_{comp}$$
$$+ a_9\left(\frac{Pe_{comp}}{Pe_{comp,max}}\right) n_{comp}$$

, où les coefficients $a_0$ à ag sont des coefficients définis par tous moyens appropriés, $Pe_{comp}$ représente une puissance électrique d'un compresseur, $n_{comp}$ représente une vitesse de rotation d'un compresseur, $T_{air}$ représente une température de l'air,

4) Réalisation d'une estimation du temps de fonctionnement d'une charge pilotée à partir d'un historique glissant de consommation d'électricité, de prévisions de la température extérieure à l'horizon de temps déterminé, et d'un modèle d'estimation de la puissance thermique produite par un condenseur d'un chauffe-eau thermodynamique,

5) Calcul dynamique des critères d'activation de la charge pour minimiser le soutirage sur le réseau d'alimentation électrique et maximiser l'autoconsommation de l'énergie photovoltaïque.

**6.** Procédé selon la revendication 5, **caractérisé en ce qu'**il comprend les étapes suivantes :

1) Réaliser une estimation du temps de fonctionnement de la charge pilotée à partir d'un historique glissant de consommation d'électricité, d'un modèle de coefficient de performance, et de prévisions de la température extérieure à un horizon de temps déterminé,

2) Réaliser une estimation à un horizon de temps déterminé, de l'excédent de production d'énergie renouvelable, par différence entre :

. Une estimation à l'horizon de temps déterminé, d'une production d'énergie photovoltaïque en utilisant un modèle de simulation de l'installation photovoltaïque d'une part et des prévisions météorologiques d'autre part,

. Une estimation à l'horizon de temps déterminé, de la consommation des usages hors charge pilotée par auto-apprentissage à partir d'un historique glissant de consommation, et

3) Opérer un calcul dynamique de deux critères d'activation de la charge pour minimiser le soutirage sur le réseau d'alimentation électrique et maximiser l'autoconsommation d'énergie photovoltaïque.

**7.** Procédé selon l'une des revendications 5 ou 6, **caractérisé en ce qu'**il comprend une étape de réalisation d'une estimation à un horizon de temps déterminé, de la production d'énergie électrique renouvelable photovoltaïque, en utilisant un modèle de simulation de l'installation de production d'énergie électrique renouvelable photovoltaïque, d'une part et des prévisions météorologiques d'autre part.

**8.** Procédé selon l'une des revendications 5 à 7, **caractérisé en ce que** l'horizon de temps déterminé est de 24 heures pleines.

**9.** Procédé selon l'une des revendications 5 à 8, **caractérisé en ce que** la charge pilotée est un ballon de stockage d'eau chaude sanitaire.

**10.** Procédé selon l'une des revendications 5 à 9 prise en combinaison avec la revendication 6, **caractérisé en ce que** le calcul dynamique de critères d'activation de la charge comprend les étapes qui consistent à opérer

. un calcul dynamique d'un seuil optimal de relance, et
. un calcul dynamique d'une heure de programmation de l'activation de la charge, permettant de respecter une heure de fin de préparation.

**11.** Procédé selon la revendication 10, **caractérisé en ce que** le calcul dynamique d'un seuil optimal de relance prend en compte dans une consigne de pilotage un temps minimal de fonctionnement, et un temps minimal d'arrêt, pour éviter les courts cycles qui endommagent le matériel.

**12.** Procédé selon la revendication 11, dans lequel le calcul dynamique d'un seuil optimal de relance est opéré toutes les heures et prend en compte dans une consigne de pilotage un temps minimal de fonctionnement de 15 minutes et un temps minimal d'arrêt de 5 minutes, et dans lequel le calcul dynamique d'une heure de programmation de l'activation de la charge est opéré toutes les 10 minutes.

**13.** Procédé selon la revendication 5, **caractérisé en ce que** l'étape de prévision de la puissance thermique de la charge électrique (32) non modulable en puissance, exploite pour l'application à tout type de chauffe-eau thermodynamique, une extrapolation d'un modèle polynomial du type :

$$\dot{Q}_{cond} = \frac{V_{tank}}{V_{tank,ref}} \frac{t_{heating,ref}}{t_{heating}} \dot{Q}_{cond,ref}$$

**14.** Procédé selon l'une des revendications 5 ou 13, **caractérisé en ce que** la définition du temps d'alimentation de la charge électrique intègre des phases de dégivrage d'une pompe à chaleur associée à la charge électrique.

**15.** Procédé selon l'une des revendications 5 ou 13 ou 14, **caractérisé en ce que** la définition du temps d'alimentation de la charge électrique intègre d'une part la durée intrinsèque de dégivrage d'une pompe à chaleur associée à la charge électrique et d'autre part la période nécessaire pour assurer la remontée en température initiale du ballon formant la charge, avant le dégivrage, dûe au refroidissement du ballon provoqué par le dégivrage.

**Patentansprüche**

**1.** Stromversorgungssystem umfassend:

- ein Stromversorgungsnetz (20),
- mindestens eine lokale Quelle (10) erneuerbarer Energie, deren Erzeugung entweder über das Stromversorgungsnetz (20) eingespeist oder vom Eigentümer der Quelle (10) selbst verbraucht wird,
- ein System (12) zur Messung der Erzeugung, mit dem die Erzeugung der Quelle (10) erneuerbarer Energie bestimmt werden kann wird,
- eine elektrische Last (32), die nicht in der Leistung moduliert werden kann,
- ein System (34) zur Messung des Energieverbrauchs,
- eine Vorrichtung (33) zur Messung des Stromverbrauchs der Last (32),
- eine Steuervorrichtung (36), welche die Informationen aus den Messsystemen (12, 34, 33) integriert und die Kriterien für das Einschalten der elektrischen Last (32) berechnet, um die Energieerzeugung aufzunehmen und gleichzeitig die Entnahme aus dem Netz (20) zu minimieren, wobei die Steuereinrichtung umfasst:

1) Mittel zur Durchführung einer Schätzung der Erzeugung erneuerbarer elektrischer Energie über einen bestimmten Zeithorizont unter Verwendung eines Simulationsmodells der Anlage zur Erzeugung erneuerbarer elektrischer Energie einerseits und Wettervorhersagen andererseits;

2) Mittel zur Durchführung einer Schätzung des Verbrauchs der Nutzungen ohne Last über einen bestimmten Zeithorizont, geregelt durch Selbstlernen auf der Grundlage einer rollierenden Verbrauchshistorie,

3) Mittel zur Vorhersage einer thermischen Leistung der elektrischen Last (32), die nicht in der Leistung moduliert werden kann, mithilfe einer multiparametrischen Gleichung, die ein Polynommodell zweiter Ordnung der thermischen Leistung eines thermodynamischen Warmwasserbereiters des Typs

$$\dot{Q}_{cond,ref}\left(n_{comp}, \frac{Pe_{comp}}{Pe_{comp,max}}, T_{air}\right)$$

$$= a_0 + a_1 n_{comp} + a_2 n_{comp}{}^2 + a_3\left(\frac{Pe_{comp}}{Pe_{comp,max}}\right) + a_4\left(\frac{Pe_{comp}}{Pe_{comp,max}}\right)^2$$

$$+ a_5 T_{air} + a_6 T_{air}{}^2 + a_7 T_{air}\left(\frac{Pe_{comp}}{Pe_{comp,max}}\right) + a_8 T_{air} n_{comp}$$

$$+ a_9\left(\frac{Pe_{comp}}{Pe_{comp,max}}\right)n_{comp}$$

verwendet, worin die Koeffizienten $a_0$ bis $a_9$ Koeffizienten sind, die mit allen geeigneten Mitteln definiert werden, $Pe_{comp}$ für eine elektrische Leistung eines Kompressors steht, $n_{comp}$ für eine Drehzahl eines Kompressors steht und $T_{air}$ für eine Lufttemperatur steht,

4) Mittel zur Durchführung einer Schätzung der Betriebszeit der Last, die ausgehend von einer rollierenden Historie des Stromverbrauchs, einer Vorhersage der Außentemperatur über den bestimmten Zeithorizont und einem Modell zur Schätzung der von einem Kondensator eines thermodynamischen Warmwasserbereiters erzeugten thermischen Leistung geregelt wird,

5) Mittel zur Durchführung einer dynamischen Berechnung der Kriterien für die Einschaltung der Last, um die Entnahme aus dem Stromversorgungsnetz zu minimieren und den Eigenverbrauch der Photovoltaikenergie zu maximieren;

so dass die Steuervorrichtung (36) bei Eigenverbrauch der von der lokalen Quelle (10) gelieferten Erzeugung die Optimierung der Nutzung der von der Quelle (10) erneuerbarer Energie erzeugten Energie ermöglicht.

2. System nach Anspruch 1, **dadurch gekennzeichnet, dass** die Steuervorrichtung (36) umfasst:

1) Mittel zur Durchführung einer Schätzung der Betriebszeit der Last, die ausgehend von einer rollierenden Historie des Stromverbrauchs, einem Leistungskoeffizientenmodell und einer Vorhersage der Außentemperatur über einen bestimmten Zeithorizont geregelt wird,

2) Mittel zur Durchführung einer Schätzung des Überschusses an erneuerbarer Energie über einen bestimmten Zeithorizont, der sich ergibt aus der Differenz zwischen:

. einer Schätzung der Photovoltaikerzeugung über einen bestimmten Zeithorizont unter Verwendung eines Simulationsmodells der Photovoltaikanlage einerseits und Wettervorhersagen andererseits,

. einer Schätzung des Verbrauchs der Nutzungen ohne Last über einen bestimmten Zeithorizont, geregelt durch Selbstlernen auf der Grundlage einer rollierenden Verbrauchshistorie, und

3) Mittel zur Durchführung einer dynamischen Berechnung von zwei Kriterien für die Einschaltung der Last, um die Entnahme aus dem Stromversorgungsnetz zu minimieren und den Eigenverbrauch von Photovoltaikenergie zu maximieren.

3. System nach einem der Ansprüche 1 oder 2, **dadurch gekennzeichnet, dass** die elektrische Last (32), deren Leistung nicht moduliert werden kann, ein thermodynamischer Warmwasserbereiter mit fester oder variabler Drehzahl jedoch ohne externe Frequenzsteuerung ist.

4. System nach einem der Ansprüche 1 bis 3, **dadurch gekennzeichnet, dass** die mindestens eine lokale Quelle (10) erneuerbarer Energie aus mindestens einem Photovoltaikmodul besteht und dass die Steuervorrichtung Mittel umfasst, die für die Durchführung einer Schätzung der Erzeugung von elektrischer Photovoltaikenergie über einen bestimmten Zeithorizont unter Verwendung eines Simulationsmodells der Photovoltaikanlage zur Erzeugung elektrischer Energie einerseits und Wettervorhersagen andererseits ausgelegt sind.

**5.** Verfahren zur Optimierung der Nutzung erneuerbarer Energie, die in dem System nach einem der Ansprüche 1 bis 4 zur Verfügung steht, insbesondere zur Optimierung des Eigenverbrauchs einer Überproduktion von elektrischer Energie auf der Grundlage erneuerbarer Energie, **dadurch gekennzeichnet**, das es die folgenden Schritte umfasst:

1) Durchführen einer Schätzung der Erzeugung erneuerbarer elektrischer Energie über einen bestimmten Zeithorizont unter Verwendung eines Simulationsmodells der Anlage zur Erzeugung erneuerbarer elektrischer Energie einerseits und Wettervorhersagen andererseits,
2) Durchführen einer Schätzung des Verbrauchs der Nutzungen ohne Last über einen bestimmten Zeithorizont, geregelt durch Selbstlernen auf der Grundlage einer rollierenden Verbrauchshistorie,
3) Vorhersagen der thermischen Leistung einer elektrischen Last, die nicht moduliert werden kann, mithilfe einer multiparametrischen Gleichung, die ein Polynommodell zweiter Ordnung der thermischen Leistung eines thermodynamischen Warmwasserbereiters des Typs

$$\dot{Q}_{cond,ref}\left(n_{comp}, \frac{Pe_{comp}}{Pe_{comp,max}}, T_{air}\right)$$
$$= a_0 + a_1 n_{comp} + a_2 n_{comp}^2 + a_3\left(\frac{Pe_{comp}}{Pe_{comp,max}}\right) + a_4\left(\frac{Pe_{comp}}{Pe_{comp,max}}\right)^2$$
$$+ a_5 T_{air} + a_6 T_{air}^2 + a_7 T_{air}\left(\frac{Pe_{comp}}{Pe_{comp,max}}\right) + a_8 T_{air} n_{comp}$$
$$+ a_9\left(\frac{Pe_{comp}}{Pe_{comp,max}}\right)n_{comp}$$

verwendet, worin die Koeffizienten $a_0$ bis $a_9$ Koeffizienten sind, die durch alle geeigneten Mittel definiert werden, $Pe_{comp}$ für eine elektrische Leistung eines Kompressors steht, $n_{comp}$ für eine Drehzahl eines Kompressors steht und $T_{air}$ für eine Lufttemperatur steht,
4) Durchführen einer Schätzung der Betriebszeit einer Last, die ausgehend von einer rollierenden Historie des Stromverbrauchs, einer Vorhersage der Außentemperatur über den bestimmten Zeithorizont und einem Modell zur Schätzung der von einem Kondensator eines thermodynamischen Warmwasserbereiters erzeugten thermischen Leistung geregelt wird,
5) Dynamisches Berechnen der Kriterien für die Einschaltung der Last, um die Entnahme aus dem Stromversorgungsnetz zu minimieren und den Eigenverbrauch der Photovoltaikenergie zu maximieren.

**6.** Verfahren nach Anspruch 5, **dadurch gekennzeichnet, dass** es die folgenden Schritte umfasst:

1) Durchführen einer Schätzung der Betriebszeit der Last, die ausgehend von einer rollierenden Historie des Stromverbrauchs, einem Leistungskoeffizientenmodell und einer Vorhersage der Außentemperatur über einen bestimmten Zeithorizont geregelt wird,
2) Durchführen einer Schätzung der Überproduktion erneuerbarer Energie über einen bestimmten Zeithorizont, der sich ergibt aus der Differenz zwischen:

• einer Schätzung einer Erzeugung von Photovoltaikenergie über den bestimmten Zeithorizont unter Verwendung eines Simulationsmodells der Photovoltaikanlage einerseits und Wettervorhersagen andererseits,
• einer Schätzung des Verbrauchs der Nutzungen ohne Last über einen bestimmten Zeithorizont, geregelt durch Selbstlernen auf der Grundlage einer rollierenden Verbrauchshistorie, und

3) Durchführen einer dynamischen Berechnung von zwei Kriterien für die Einschaltung der Last, um die Entnahme aus dem Stromversorgungsnetz zu minimieren und den Eigenverbrauch von Photovoltaikenergie zu maximieren.

**7.** Verfahren nach einem der Ansprüche 5 oder 6, **dadurch gekennzeichnet, dass** es einen Schritt des Durchführens einer Schätzung der Erzeugung erneuerbarer elektrischer Photovoltaikenergie über einen bestimmten Zeithorizont unter Verwendung eines Simulationsmodells der Anlage zur Erzeugung erneuerbarer elektrischer Photovoltaikenergie einerseits und Wettervorhersagen andererseits umfasst.

**8.** Verfahren nach einem der Ansprüche 5 bis 7, **dadurch gekennzeichnet, dass** der bestimmte Zeithorizont 24 volle Stunden ist.

**9.** Verfahren nach einem der Ansprüche 5 bis 8, **dadurch gekennzeichnet, dass** die geregelte Last ein Warmwasserspeicher ist.

**10.** Verfahren nach einem der Ansprüche 5 bis 9 in Verbindung mit Anspruch 6, **dadurch gekennzeichnet, dass** die dynamische Berechnung der Kriterien für die Einschaltung der Last die Schritte umfasst zur Durchführung

• einer dynamischen Berechnung eines optimalen Schwellenwerts für das Wiederanlaufen und
• einer dynamischen Berechnung einer Programmierzeit für die Einschaltung der Last, die es ermöglicht, eine Zeit des Vorbereitungsendes einzuhalten.

**11.** Verfahren nach Anspruch 10, **dadurch gekennzeichnet, dass** bei der dynamischen Berechnung eines optimalen Schwellenwerts für das Wiederanlaufen eine minimale Betriebszeit und eine minimale Stillstandszeit in einem Regelungssollwert berücksichtigt werden, um kurze Zyklen zu vermeiden, die die Anlage beschädigen.

**12.** Verfahren nach Anspruch 11, wobei die dynamische Berechnung eines optimalen Schwellenwerts für das Wiederanlaufen stündlich durchgeführt wird und eine minimale Betriebszeit von 15 Minuten und eine minimale Stillstandszeit von 5 Minuten in einem Regelungssollwert berücksichtigt werden, und wobei eine dynamische Berechnung einer Programmierzeit für die Einschaltung der Last alle 10 Minuten durchgeführt wird.

**13.** Verfahren nach Anspruch 5, **dadurch gekennzeichnet, dass** der Schritt des Vorhersagens der thermischen Leistung der elektrischen Last (32), deren Leistung nicht moduliert werden kann, für die Anwendung auf jeden Typ von thermodynamischem Warmwasserbereiter eine Extrapolation eines Polynommodells des Typs:

$$\dot{Q}_{cond} = \frac{V_{tank}}{V_{tank,ref}} \frac{t_{heating,ref}}{t_{heating}} \dot{Q}_{cond,ref}$$

nutzt.

**14.** Verfahren nach einem der Ansprüche 5 oder 13, **dadurch gekennzeichnet, dass** die Definition der Versorgungszeit der elektrischen Last Phasen des Abtauens einer Wärmepumpe umfasst, die der elektrischen Last zugeordnet ist.

**15.** Verfahren nach einem der Ansprüche 5 oder 13 oder 14, **dadurch gekennzeichnet, dass** die Definition der Versorgungszeit der elektrischen Last einerseits die inhärente Dauer des Abtauens einer Wärmepumpe, die der elektrischen Last zugeordnet ist, und andererseits den Zeitraum umfasst, der erforderlich ist, um den anfänglichen Temperaturanstieg des die Last bildenden Speichers vor dem Abtauen aufgrund der durch das Abtauen verursachten Abkühlung des Speichers sicherzustellen.

**Claims**

**1.** A power supply system comprising:

- a power supply network (20),
- at least one local source (10) of renewable energy, whose production is either injected on the power supply network (20), or self-consumed by the owner of the source (10),
- a production measurement system (12) for knowing the production of the renewable energy source (10),
- an electrical load that cannot be power-modulated (32),
- a system (34) for measuring the energy consumption,
- a member (33) for measuring the electricity consumption of the load (32),
- a monitoring unit (36) which integrates the information derived from the aforementioned measurement systems (12, 34, 33) and calculates the criteria for engaging the electrical load (32) to absorb the energy production while minimizing the withdrawal on the network (20), the monitoring body comprising:

1) means designed for making an estimation, over a determined time horizon, of the production of renewable electrical energy, by using a simulation model of the renewable electrical energy production installation on the one hand, and of weather forecasts on the other hand,

2) means designed for making an estimation, over the determined time horizon, of the consumption of uses excluding the load piloted by self-learning from a sliding consumption history,

3) means designed for predicting a thermal power of the electrical load that cannot be power-modulated (32), using a multi-parametric equation, which utilizes a second-order polynomial model of the thermal power of a thermodynamic water heater of the type

$$
\dot{Q}_{cond,ref}\left(n_{comp}, \frac{Pe_{comp}}{Pe_{comp,max}}, T_{air}\right)
$$
$$
= a_0 + a_1 n_{comp} + a_2 n_{comp}{}^2 + a_3\left(\frac{Pe_{comp}}{Pe_{comp,max}}\right) + a_4\left(\frac{Pe_{comp}}{Pe_{comp,max}}\right)^2
$$
$$
+ a_5 T_{air} + a_6 T_{air}{}^2 + a_7 T_{air}\left(\frac{Pe_{comp}}{Pe_{comp,max}}\right) + a_8 T_{air} n_{comp}
$$
$$
+ a_9\left(\frac{Pe_{comp}}{Pe_{comp,max}}\right) n_{comp}
$$

, where the coefficients $a_0$ to $a_9$ are coefficients defined by any suitable means, $Pe_{comp}$ represents an electrical power of a compressor, $n_{comp}$ represents a speed of rotation of a compressor, $T_{air}$ represents a temperature of the air,

4) means designed for making an estimation of the operating time of the piloted load from a sliding history of electricity consumption, forecasts of the outside temperature over the determined time horizon, and a model for estimating the thermal power produced by a condenser of a thermodynamic water heater,

5) means designed for making a dynamic calculation of the load activation criteria to minimize the withdrawal from the power supply network and maximize the self-consumption of photovoltaic energy,

so that in case of self-consumption of the production provided by the local source (10), the monitoring member (36) allows optimizing the use of the energy produced by the renewable energy source (10).

2. The system according to claim 1, **characterized in that** the monitoring member (36) comprises:

1) means designed for making an estimation of the operating time of the piloted load from a sliding history of electricity consumption, a performance coefficient model, and forecasts of the outside temperature over a determined time horizon,

2) means designed for making an estimation, over a determined time horizon, of the renewable energy surplus, by the difference between:

. An estimation, over the determined time horizon, of the photovoltaic production by using a simulation model of the photovoltaic installation on the one hand, and of weather forecasts on the other hand,
. An estimation, over the determined time horizon, of the consumption of uses excluding the load piloted by self-learning from a sliding consumption history, and

3) means designed for making a dynamic calculation of two load activation criteria to minimize the withdrawal from the power supply network and maximize the self-consumption of photovoltaic energy.

3. The system according to any of claims 1 or 2, **characterized in that** the electrical load that cannot be power-modulated (32) is a thermodynamic water heater at fixed or variable speed but without external control of the frequency.

4. The system according to any of claims 1 to 3, **characterized in that** the at least one local source (10) of renewable energy is formed of at least one photovoltaic panel, and **in that** the monitoring member comprises means designed for making an estimation, over a determined time horizon, of the photovoltaic electrical energy production, by using a simulation model of the photovoltaic electrical energy production installation on the one hand, and of weather forecasts on the other hand.

5. A method for optimizing the use of a renewable energy available in the system in accordance with any of claims 1 to 4, in particular in view of optimizing the self-consumption of an excess electrical energy production based on a renewable energy, **characterized in that** it comprises the following steps:

1) Making an estimation, over a determined time horizon, of the renewable electrical energy production, by using a simulation model of the renewable electrical energy production installation on the one hand, and of weather forecasts on the other hand,

2) Making an estimation, over a determined time horizon, of the consumption of uses excluding the load piloted by self-learning from a sliding consumption history,

3) forecasting the thermal power of an electrical load that cannot be power-modulated, using a multiparametric equation, which utilizes a second-order polynomial model of the thermal power of a thermodynamic water heater of the type

$$\dot{Q}_{cond,ref}\left(n_{comp}, \frac{Pe_{comp}}{Pe_{comp,max}}, T_{air}\right)$$
$$= a_0 + a_1 n_{comp} + a_2 n_{comp}^2 + a_3\left(\frac{Pe_{comp}}{Pe_{comp,max}}\right) + a_4\left(\frac{Pe_{comp}}{Pe_{comp,max}}\right)^2$$
$$+ a_5 T_{air} + a_6 T_{air}^2 + a_7 T_{air}\left(\frac{Pe_{comp}}{Pe_{comp,max}}\right) + a_8 T_{air} n_{comp}$$
$$+ a_9\left(\frac{Pe_{comp}}{Pe_{comp,max}}\right)n_{comp}$$

, where the coefficients $a_0$ to $a_9$ are coefficients defined by any suitable means, $Pe_{comp}$ represents an electrical power of a compressor, $n_{comp}$ represents a speed of rotation of a compressor, $T_{air}$ represents a temperature of the air,

4) Making an estimation of the operating time of a piloted load from a sliding history of electricity consumption, forecasts of the outside temperature over the determined time horizon, and a model for estimating the thermal power produced by a condenser of a thermodynamic water heater,

5) Dynamic calculation of the load activation criteria to minimize the withdrawal from the power supply network and maximize the self-consumption of photovoltaic energy.

6. The method according to claim 5, **characterized in that** it comprises the following steps:

1) Making an estimation of the operating time of the piloted load from a sliding history of electricity consumption, a performance coefficient model, and forecasts of the outside temperature over a determined time horizon,

2) Making an estimation, over a determined time horizon, of the excess renewable energy production, by difference between:

. An estimation, over a determined time horizon, of a photovoltaic energy production by using a simulation model of the photovoltaic installation on the one hand, and weather forecasts on the other hand,

. An estimation, over the determined time horizon, of the consumption of uses excluding the load piloted by self-learning from a sliding consumption history, and

3) Making a dynamic calculation of two load activation criteria to minimize the withdrawal from the power supply network and maximize the self-consumption of photovoltaic energy.

7. The method according to any of claims 5 or 6, **characterized in that** it comprises a step of making an estimation, over a determined time horizon, of the photovoltaic renewable electrical energy production, by using a simulation model of the photovoltaic renewable electrical energy production installation on the one hand, and weather forecasts on the other hand.

8. The method according to any of claims 5 to 7, **characterized in that** the determined time horizon is 24 full hours.

9. The method according to any of claims 5 to 8, **characterized in that** the piloted load is a domestic hot water storage tank.

10. The method according to any of claims 5 to 9 taken in combination with claim 6, **characterized in that** the dynamic calculation of the load activation criteria comprises the steps of making:

    . a dynamic calculation of an optimal restart threshold, and
    . a dynamic calculation of an hour of programming the activation of the load, allowing meeting an hour of end of preparation.

11. The method according to claim 10, **characterized in that** the dynamic calculation of an optimal restart threshold takes into account in a piloting setpoint a minimum operating time, and a minimum stopping time, to avoid short cycles that damage the equipment.

12. The method according to claim 11, wherein the dynamic calculation of an optimal restart threshold is made every hour and takes into account in a piloting setpoint a minimum operating time of 15 minutes and a minimum stopping time of 15 minutes and a minimum stopping time of 5 minutes, and wherein the dynamic calculation of an hour of programming the activation of the load is made every 10 minutes.

13. The method according to claim 5, **characterized in that** the step of forecasting the thermal power of the electrical load that cannot be power-modulated (32), utilizes for the application to any type of thermodynamic water heater, an extrapolation of a polynomial model of the type:

$$\dot{Q}_{cond} = \frac{V_{tank}}{V_{tank,ref}} \frac{t_{heating,ref}}{t_{heating}} \dot{Q}_{cond,ref}$$

14. The method according to any of claims 5 or 13, **characterized in that** the definition of the electrical load supply time integrates phases of defrosting a heat pump associated with the electrical load.

15. The method according to any of claims 5 or 13 or 14, **characterized in that** the definition of the electrical load supply time integrates on the one hand the intrinsic duration of defrosting of a heat pump associated with the electrical load and on the other hand the period of time necessary to ensure the initial temperature rise of the tank forming the load, before defrosting, due to the cooling of the tank caused by the defrosting.

**FIG. 1**

EP 3 428 858 B1

**FIG. 2**

FIG. 3

FIG. 4

FIG. 5

FIG. 6

a ▬·▬·▬·▬ 10% of the tank at 10°C

b ▬▬▬▬ 30% of the tank at 10°C       ×××Experimental Data

c ▬ ▬ ▬ ▬ 50% of the tank at 10°C

d ················ 70% of the tank at 10°C

FIG. 7

FIG. 7

EP 3 428 858 B1

FIG. 7

FIG. 7c

a ——————— Electric Power (W) (Data)

b ·················· Electric Power (W) (Model)

EP 3 428 858 B1

FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2065021 A1

- US 2009188486 A1

**Littérature non-brevet citée dans la description**

- **HACHEM BEN NEJMA.** *Etude de l'interaction thermo-aéraulique entre un capteur PV et une pompe à chaleur (PAC) intégrés à un bâtiment basse énergie,* 01 Janvier 2012

- **KEVIN RUBEN DEUTZ et al.** Modeling and experimental study of a heat pump water heater cycle. *16th international refrigeration and air conditioning conférence at Purdue,* 14 Juillet 2016
- **K. R. DEUTZ.** *Thèse,* 2018